# EUROPEAN PATENT APPLICATION

(11) **EP 4 471 571 A1**
(43) Date of publication of application: **04.12.2024**
(21) Application number: 23778332.9
(22) Date of filing: 29.03.2023
(51) Int. Cl.: G06F 3/14

(54) **RICH MEDIA INFORMATION PROCESSING METHOD AND SYSTEM, AND RELATED APPARATUS**

(30) Priority: 31.03.2022 CN 202210336417
(71) Applicant: Huawei Technologies Co., Ltd., Shenzhen, Guangdong 518129 (CN)
(72) Inventor: YU, Yong, Shenzhen, Guangdong 518129 (CN); ZHAO, Dexiang, Shenzhen, Guangdong 518129 (CN); CHEN, Dawei, Shenzhen, Guangdong 518129 (CN)
(74) Representative: Pfenning, Meinig & Partner mbB
(86) International application number: PCT/CN2023/084886
(87) International publication number: WO 2023/185967

(57) **Abstract**

This application discloses a rich media information processing system. In the system, a terminal device sends first information to a card server, where the first information indicates a first rich media capability set supported by a first application of the terminal device; a service device sends card parameters and a device identifier of the terminal device to the card server; the card server generates card data of a first rich media card and a corresponding first label based on the card parameters and the first rich media capability set, and sends the first label to the service device; the service device sends a rich media message including the first label to the first application; the first application sends an obtaining request including the first label to the card server; the card server sends the card data to the first application; and the first application of the first terminal device displays the first rich media card based on the card data. In this way, the rich media message in a rich media capability range of the first application can be obtained, and the rich media card corresponding to the rich media message is displayed in the first application.

## Description

This application claims priority to Chinese Patent Application No. 202210336417.X, filed with the China National Intellectual Property Administration on March 31, 2022 and entitled "RICH MEDIA INFORMATION PROCESSING METHOD AND SYSTEM, AND RELATED APPARATUS", which is incorporated herein by reference in its entirety.

### TECHNICAL FIELD

This application relates to the field of electronic technologies, and in particular, to a rich media information processing method and system, and a related apparatus.

### BACKGROUND

Rich media (rich media) are an information transmission method with animation, sound, videos, and/or interaction. The rich media may include one form or a combination of several forms of streaming media, sound, Flash, and program design languages such as Java, JavaScript, and DHTML. Compared with a common short message service message (that is, a text short message service message or a multimedia messaging service message), a rich media message displayed in the form of a rich media card carries a large amount of information, and may provide various types of information, such as texts, images, videos, and data. In addition, the rich media message has rich interaction functions, and can provide more services for users.

However, in an application (application, APP) of a terminal device, display and interaction functions of a rich media card are limited by a rendering capability and an interaction capability of the APP. When the APP does not have a capability required by the rich media card, a device on a terminal side cannot display the rich media card. This greatly reduces experience of using rich media messages by users.

### SUMMARY

This application provides a rich media information processing method and system, and a related apparatus, so as to obtain a rich media message in a rich media capability range of a first application of a terminal device, and display the rich media message in the first application in a form of a rich media card, thereby effectively improving user experience.

According to a first aspect, this application provides a rich media information processing system, including a first terminal device, a service device, and a card server, where
the first terminal device is configured to send first information to the card server, where the first information indicates a first rich media capability set supported by a first application of the first terminal device, and the first rich media capability set includes at least one rich media capability; the service device is configured to send card parameters of an original rich media card and a device identifier of the first terminal device to the card server; the card server is further configured to: generate first card information based on the card parameters and the first rich media capability set, where the first card information includes card data of a first rich media card and a corresponding first label, and send the first label to the service device; the service device is further configured to send a rich media message to the first application of the first terminal device, where the rich media message includes the first label; the first application of the first terminal device is further configured to send an obtaining request to the card server, where the obtaining request includes the first label; the card server is further configured to send the card data to the first application of the first terminal device; and the first application of the first terminal device is further configured to display the first rich media card based on the card data.

In this embodiment of this application, when the first application of the first terminal device supports only some rich media capabilities required by the original rich media card, the card server may adaptively degrade the original rich media card to a rich media card in the rich media capability range of the first application based on the rich media capability set of the first application of the first terminal device. In this way, the first terminal device can display the rich media card and support all interaction capabilities of the rich media card in the first application, to effectively improve user experience.

In an implementation, rich media capabilities include a component rendering capability and an interaction capability; the component rendering capability is a capability of rendering a specified component in a rich media card, where the specified component includes one or more of the following: a static picture, a dynamic picture, a video, a horizontal scroll picture, a carousel picture, a voting form, a button, and the like; and the interaction capability includes one or more of the following: jumping to a browser, jumping to a preset application (APP), jumping to a phone APP for dial, jumping to a map APP for positioning and navigation, jumping to another APP to share a rich media card, jumping to a quick application, and the like, where the preset APP is an APP having a web page version.

In an implementation, the card data includes card layout information of the original rich media card and component parameters of each component in the original rich media card, and the component parameters include some or all of a component name, information indicating display content of a component, a URL link for implementing a specified interaction capability of the component, a component type, and the like.

In an implementation, the first information includes an identifier of each rich media capability in the first rich media set; or the first information includes a version number of the first rich media set, the card server stores version numbers of a plurality of rich media capability sets, and the plurality of rich media capability sets include the first rich media set. Rich media capabilities are uploaded through version numbers, so that storage space and signaling overheads can be reduced.

In an implementation, generating the first card information based on the card parameters and the first rich media capability set range specifically includes: determining, based on the card parameters, at least one rich media capability required by each component in the original rich media card, where a rich media capability required by a first component includes a first rich media capability, and the first component is any component in the original rich media card; and when the first rich media capability set does not include the first rich media capability, performing capability degradation on the first component based on a preset capability degradation relationship; and after capability degradation, generating the first card information of the first rich media card within a rich media capability range of the first application.

In an implementation, the card parameters include a component type of the first component, and the rich media capability required by the first component includes a component rendering capability corresponding to the component type of the first component; and when the card parameters include a URL connection that is used for implementing a specified interaction capability and that is of the first component, the rich media capability required by the first component includes the specified interaction capability.

In an implementation, the capability degradation relationship includes one or more of the following: the first rich media capability is degraded to a second rich media capability, or the first rich media capability is degraded to empty; or the second rich media capability is degraded to a third rich media capability, or the second rich media capability is degraded to empty, where degrading to empty means that degrading to another rich media capability is not allowed. In this embodiment of this application, multi-layer degradation can be performed on some rich media capabilities.

In an implementation, the capability degradation relationship includes a capability degradation relationship of a component rendering capability and a capability degradation relationship of an interaction capability, where the capability degradation relationship of the component rendering capability includes one or more of the following: a dynamic picture rendering capability is degraded to a static picture rendering capability, a horizontal scroll picture rendering capability is degraded to the static picture rendering capability, a video rendering capability is degraded to the static picture rendering capability, a carousel picture rendering capability is degraded to the horizontal scroll picture rendering capability, the static picture rendering capability is degraded to empty, and a voting form rendering capability is degraded to empty; and the capability degradation relationship of the interaction capability includes one or more of the following: a capability of jumping to a preset APP is degraded to a capability of jumping to a browser; the capability of jumping to the browser is degraded to empty; a capability of jumping to a phone APP for dial is degraded to empty; a capability of jumping to a map APP for positioning and navigation is degraded to empty; a capability of jumping to another page of the first application to reply to information is degraded to empty; and a capability of jumping to another APP to share a rich media card is degraded to empty.

In an implementation, the first rich media capability set does not include the first rich media capability, but includes the second rich media capability, the second rich media capability is a capability obtained after the first rich media capability is degraded, and the first rich media capability and the second rich media capability are component rendering capabilities; the card parameters include information indicating first display content of the first component, where the first display content is presented by using the first rich media capability; and the first rich media card includes a second component, display content of the second component is second display content, the second display content is determined based on the first display content, and the second display content is presented by using the second rich media capability.

In an implementation, the first rich media capability is the video rendering capability, and the second rich media capability is the static picture rendering capability; and the first display content is a video, and the second display content is one frame of a static image in the video.

In an implementation, the first rich media capability set includes the third rich media capability, but does not include the first rich media capability and the second rich media capability, the third rich media capability is a capability obtained after the second rich media capability is degraded, and the first rich media capability, the second rich media capability, and the third rich media capability are component rendering capabilities; the card parameters include information indicating first display content of the first component, where the first display content is presented by using the first rich media capability; and the first rich media card includes a third component, display content of the third component is third display content, the third display content is determined based on the first display content, and the third display content is presented by using the third rich media capability.

In an implementation, the first rich media capability set does not include the first rich media capability, the first rich media capability cannot be degraded to another rich media capability, and the first rich media capability is the component rendering capability; the card parameters include information indicating first display content of the first component, and the first display content is presented by using the first rich media capability; and the first rich media card does not display the first display content.

In an implementation, the first rich media card includes a fourth component, display content of the fourth component is a first URL link or replacement content of the first component, and the card parameters include the first URL link that is used for implementing an interaction capability and that is of the first component and the replacement content of the first component.

In an implementation, the card parameters include the first URL link that is used for implementing a fourth rich media capability and that is of the first component and a second URL link that is used for implementing a fifth rich media capability and that is of the first component, where the fifth rich media capability is a capability obtained after the fourth rich media capability is degraded, and the fourth rich media capability and the fifth rich media capability are interaction capabilities; and when the first rich media capability set includes the fourth rich media capability, the first rich media card includes the first component, and the first terminal device is further configured to: in response to a first input operation on the first component, jump, based on the fourth rich media capability, to a user interface indicated by the first URL link; or when the first rich media capability set does not include the fourth rich media capability, but includes the fifth rich media capability, the first rich media card includes a fifth component, and the first terminal device is further configured to: in response to a first input operation on the fifth component, jump, based on the fifth rich media capability, to a user interface indicated by the second URL link.

In an implementation, the first URL link is a URL link of the preset APP, and the second URL link is a URL link of the web page version of the preset APP; and the fourth rich media capability is the capability of jumping to the preset APP, and the fifth rich media capability is the capability of jumping to the browser.

In an implementation, the first rich media capability set does not include the fourth rich media capability, but includes the fifth rich media capability, the fifth rich media capability is a capability obtained after the fourth rich media capability is degraded, and the fourth rich media capability and the fifth rich media capability are interaction capabilities; the card parameters include the first URL link that is used for implementing the fourth rich media capability and that is of the first component, and the card parameters do not include a URL link that is used for implementing the fifth rich media capability and that is of the first component; and the first rich media card does not include a component having the fourth rich media capability.

In an implementation, the first rich media capability set does not include a fourth rich media capability, the fourth rich media capability cannot be degraded to another rich media capability, and the fourth rich media capability is the interaction capability; the card parameters include the first URL link that is used for implementing the fourth rich media capability and that is of the first component; and the first rich media card does not include a component having the fourth rich media capability.

In an implementation, the first rich media card includes a sixth component, the sixth component is generated based on component parameters of the first component, and component parameters of the sixth component do not include the first URL link.

In an implementation, sending the obtaining request to the card server specifically includes: receiving a second input operation used to view the rich media card corresponding to the rich media message; and sending the obtaining request to the card server in response to the second input operation.

In an implementation, the system further includes a second terminal device. The second terminal device is configured to send second information to the card server, where the second information indicates a second rich media capability set supported by a first application of the second terminal device, and the second rich media capability set includes at least one rich media capability. The card server is further configured to: generate third information based on the card parameters and the second rich media capability set, and send the third information to the service device, where the third information indicates that a rich media card of the second terminal device cannot be generated based on the card parameters. The service device is further configured to send a text message corresponding to the original rich media card to the first application of the second terminal device. The first application of the second terminal device is further configured to display the text message. Costs of the rich media message are higher than costs of the text message. In this embodiment of this application, a waste of costs of the rich media message can be avoided.

In an implementation, the second information is generated when the second card parameters and the second rich media capability set meet a preset condition. The preset condition includes: It is determined, based on the preset capability degradation relationship and the first rich media capability set, that all rich media capabilities required by the original rich media card are degraded to empty, or it is determined that at least one rich media capability required by the original rich media card is degraded to empty, where degrading to empty means that degrading to another rich media capability is not allowed.

According to a second aspect, this application provides a rich media information processing method, including: A first terminal device sends first information to a card server, where the first information indicates a first rich media capability set supported by a first application, and the first rich media capability set includes at least one rich media capability; the first application of the first terminal device receives a rich media message sent by a service device, where the rich media message includes a first label, the first label is a label that is of a first rich media card and that is generated by the card server, card data of the first rich media card is generated by the card server based on card parameters that are of an original rich media card and that are sent by the service device and the first rich media capability set; the first application of the first terminal device sends an obtaining request to the card server, where the obtaining request includes the first label; the first application of the first terminal device receives the card data sent by the card server; and the first application of the first terminal device displays the first rich media card based on the card data.

In this embodiment of this application, when the first application of the first terminal device supports only some rich media capabilities required by the original rich media card, the card server may adaptively degrade the original rich media card to a rich media card in the rich media capability range of the first application based on the rich media capability set of the first application of the first terminal device. In this way, the first terminal device can display the rich media card and support all interaction capabilities of the rich media card in the first application, to effectively improve user experience.

In an implementation, rich media capabilities include a component rendering capability and an interaction capability; the component rendering capability is a capability of rendering a specified component in a rich media card, where the specified component includes one or more of the following: a static picture, a dynamic picture, a video, a horizontal scroll picture, a carousel picture, a voting form, a button, and the like; and the interaction capability includes one or more of the following: jumping to a browser, jumping to a preset application (APP), jumping to a phone APP for dial, jumping to a map APP for positioning and navigation, jumping to another APP to share a rich media card, jumping to a quick application, and the like, where the preset APP is an APP having a web page version.

In an implementation, the card data includes card layout information of the first rich media card and component parameters of each component in the first rich media card, and the component parameters include some or all of a component name, information indicating display content of a component, a URL link for implementing a specified interaction capability of the component, a component type, and the like.

In an implementation, the first information includes an identifier of each rich media capability in the first rich media set; or the first information includes a version number of the first rich media set, and different rich media capability sets correspond to different version numbers.

In an implementation, at least one rich media capability required by each component in the original rich media card is determined based on the card parameters, where a rich media capability required by a first component includes a first rich media capability, and the first component is any component in the original rich media card; and when the first rich media capability set does not include the first rich media capability, the first card information is generated through capability degradation on the first component based on a preset capability degradation relationship.

In an implementation, the card parameters include a component type of the first component, and the rich media capability required by the first component includes a component rendering capability corresponding to the component type of the first component; and when the card parameters include a URL connection that is used for implementing a specified interaction capability and that is of the first component, the rich media capability required by the first component includes the specified interaction capability.

In an implementation, the capability degradation relationship includes one or more of the following: the first rich media capability is degraded to a second rich media capability, or the first rich media capability is degraded to empty; or the second rich media capability is degraded to a third rich media capability, or the second rich media capability is degraded to empty, where degrading to empty means that degrading to another rich media capability is not allowed.

In an implementation, the capability degradation relationship includes a capability degradation relationship of a component rendering capability and a capability degradation relationship of an interaction capability, where the capability degradation relationship of the component rendering capability includes one or more of the following: a dynamic picture rendering capability is degraded to a static picture rendering capability, a horizontal scroll picture rendering capability is degraded to the static picture rendering capability, a video rendering capability is degraded to the static picture rendering capability, a carousel picture rendering capability is degraded to the horizontal scroll picture rendering capability, the static picture rendering capability is degraded to empty, and a voting form rendering capability is degraded to empty; and the capability degradation relationship of the interaction capability includes one or more of the following: a capability of jumping to a preset APP is degraded to a capability of jumping to a browser; the capability of jumping to the browser is degraded to empty; a capability of jumping to a phone APP for dial is degraded to empty; a capability of jumping to a map APP for positioning and navigation is degraded to empty; a capability of jumping to another page of the first application to reply to information is degraded to empty; and a capability of jumping to another APP to share a rich media card is degraded to empty.

In an implementation, the first rich media capability set does not include the first rich media capability, but includes the second rich media capability, the second rich media capability is a capability obtained after the first rich media capability is degraded, and the first rich media capability and the second rich media capability are component rendering capabilities; the card parameters include information indicating first display content of the first component, where the first display content is presented by using the first rich media capability; and the first rich media card includes a second component, display content of the second component is second display content, the second display content is determined based on the first display content, and the second display content is presented by using the second rich media capability.

In an implementation, the first rich media capability is the video rendering capability, and the second rich media capability is the static picture rendering capability; and the first display content is a video, and the second display content is one frame of a static image in the video.

In an implementation, the first rich media capability set includes the third rich media capability, but does not include the first rich media capability and the second rich media capability, the third rich media capability is a capability obtained after the second rich media capability is degraded, and the first rich media capability, the second rich media capability, and the third rich media capability are component rendering capabilities; the card parameters include information indicating first display content of the first component, where the first display content is presented by using the first rich media capability; and the first rich media card includes a third component, display content of the third component is third display content, the third display content is determined based on the first display content, and the third display content is presented by using the third rich media capability.

In an implementation, the first rich media capability set does not include the first rich media capability, the first rich media capability cannot be degraded to another rich media capability, and the first rich media capability is the component rendering capability; the card parameters include information indicating first display content of the first component, and the first display content is presented by using the first rich media capability; and the first rich media card does not display the first display content.

In an implementation, the first rich media card includes a fourth component, display content of the fourth component is a first URL link or replacement content of the first component, and the card parameters include the first URL link that is used for implementing an interaction capability and that is of the first component and the replacement content of the first component.

In an implementation, the card parameters include the first URL link that is used for implementing a fourth rich media capability and that is of the first component and a second URL link that is used for implementing a fifth rich media capability and that is of the first component, where the fifth rich media capability is a capability obtained after the fourth rich media capability is degraded, and the fourth rich media capability and the fifth rich media capability are interaction capabilities; and when the first rich media capability set includes the fourth rich media capability, the first rich media card includes the first component, and the method further includes: The first terminal device jumps, in response to a first input operation on the first component, based on the fourth rich media capability, to a user interface indicated by the first URL link; or when the first rich media capability set does not include the fourth rich media capability, but includes the fifth rich media capability, the first rich media card includes a fifth component, and the method further includes: The first terminal device jumps, in response to a first input operation on the fifth component, based on the fifth rich media capability, to a user interface indicated by the second URL link.

In an implementation, the first URL link is a URL link of the preset APP, and the second URL link is a URL link of the web page version of the preset APP; and the fourth rich media capability is the capability of jumping to the preset APP, and the fifth rich media capability is the capability of jumping to the browser.

In an implementation, the first rich media capability set does not include the fourth rich media capability, but includes the fifth rich media capability, the fifth rich media capability is a capability obtained after the fourth rich media capability is degraded, and the fourth rich media capability and the fifth rich media capability are interaction capabilities; the card parameters include the first URL link that is used for implementing the fourth rich media capability and that is of the first component, and the card parameters do not include a URL link that is used for implementing the fifth rich media capability and that is of the first component; and the first rich media card does not include a component having the fourth rich media capability.

In an implementation, the first rich media capability set does not include a fourth rich media capability, the fourth rich media capability cannot be degraded to another rich media capability, and the fourth rich media capability is the interaction capability; the card parameters include the first URL link that is used for implementing the fourth rich media capability and that is of the first component; and the first rich media card does not include a component having the fourth rich media capability.

In an implementation, the first rich media card includes a sixth component, the sixth component is generated based on component parameters of the first component, and component parameters of the sixth component do not include the first URL link.

According to a third aspect, this application provides a terminal device, including one or more processors and one or more memories. The one or more memories are coupled to the one or more processors. The one or more memories are configured to store computer program code, where the computer program code includes computer instructions. When the one or more processors execute the computer instructions, the terminal device is enabled to perform the rich media information processing method in any one of the possible implementations of the second aspect.

According to a fourth aspect, an embodiment of this application provides a computer storage medium, including computer instructions. When the computer instructions are run on a terminal device, the terminal device is enabled to perform the rich media information processing method in any one of the possible implementations of the second aspect.

According to a fifth aspect, an embodiment of this application provides a computer program product. When the computer program product is run on a computer, the computer is enabled to perform the rich media information processing method in any one of the possible implementations of the second aspect.

### BRIEF DESCRIPTION OF DRAWINGS

FIG. 1A to FIG. 1F are related user interfaces of a rich media short message service message according to an embodiment of this application;
FIG. 2A is a diagram of a system architecture of a rich media information processing system according to an embodiment of this application;
FIG. 2B(a) and FIG. 2B(b) are a related user interface of a rich media card according to an embodiment of this application;
FIG. 3 is a diagram of a structure of a terminal device according to an embodiment of this application;
FIG. 4A is a schematic flowchart of a rich media information processing method according to an embodiment of this application;
FIG. 4B and FIG. 4C are diagrams of rich media cards according to an embodiment of this application;
FIG. 5A to FIG. 5E show related user interfaces in which a rich media card template is selected and edited according to an embodiment of this application;
FIG. 6A to FIG. 6E are related user interfaces of a rich media short message service message according to an embodiment of this application;
FIG. 7A to FIG. 7F are related user interfaces of a rich media short message service message according to an embodiment of this application; and
FIG. 8A to FIG. 8J are related user interfaces of a rich media short message service message according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise stated, "/" represents the meaning of "or". For example, A/B may represent A or B. "And/or" in the text merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

Hereinafter, the terms "first" and "second" are used only for descriptive purposes, and cannot be understood as indicating or implying relative importance or implicitly indicating a quantity of indicated technical features. Therefore, features defined by "first" and "second" may explicitly or implicitly include one or more of the features. In the descriptions of embodiments of this application, "a plurality of" means two or more unless otherwise stated.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually represented in a form of a graphical user interface (graphical user interface, GUI), which is a user interface displayed in a graphical manner and related to computer operations. The user interface may be a visual interface element such as a text, an icon, a button, a menu, a tab, a text box, a dialog box, a status bar, a navigation bar, or a Widget that is displayed on a display of the electronic device.

**The following explains and describes technical concepts in embodiments of this application.**

A short message service (short message service, SMS) message is text information sent or received by a user through a telecommunication terminal. A short message service message can carry a small amount of information (usually equal to or less than 70 or 140 characters).

A multimedia messaging service (multimedia messaging service, MMS) can transmit information in various multimedia formats, such as a text, an image, sound, and data. Editing of the multimedia messaging service message is limited, the multimedia messaging service message can carry a small amount of information (usually equal to or less than 300 kb), fees are high, and interaction is low.

Rich media communication (rich communication services, RCS) is a communication mode proposed by the Global System for Mobile Communications Association in 2008. The RCS integrates communication services such as instant messaging, file transfer, content sharing, presentation, and location services, to enrich user experience of native mobile phone system applications such as Call, Messages, and Contact. The RCS supports enterprises in providing users with efficient, convenient, and rich services through rich media, strong interaction, and intelligence.

In embodiments of this application, rich media information may be carried by using a card, and the card carrying the rich media information may be referred to as a rich media card for short. A card is a new service form. It provides an atomic service capability with a granularity finer than that of an application (application, APP), and directly displays services or content that users are most concerned about to the users in the form of an interactive card. The card may be embedded in various APPs or interaction scenarios, to better meet user requirements.

A rich media message is a message that is of a first APP and that includes a specific label (for example, a short link). A terminal device may obtain a rich media card corresponding to the specific label, and display the rich media card in the first APP, so as to implement communication services such as instant messaging, file transfer, content sharing, and positioning by using the rich media card. The short link is a unique short website obtained by shortening any long website.

A rich media short message service message is a rich media service provided based on a basic communication service of an operator, to meet users' requirements for rich media messages. In embodiments of this application, the rich media short message service message may also be referred to as a rich media card short message service message, and is text information that includes a specific label (for example, a short link) and that is delivered through a conventional short message service message channel. By using the specific label, the terminal device may obtain a rich media card associated with the rich media short message service message, and display the rich media card in a short message service message APP, so as to implement communication services such as instant messaging, file transfer, content sharing, and positioning by using the rich media card. This is not limited to a short link. In embodiments of this application, the specific label may alternatively be information such as an identity (identity, ID) or a uniform resource locator (Uniform Resource Locator, URL) of the card. This is not specifically limited herein.

A quick application is a new application form based on a mobile phone hardware platform. A quick application framework is deeply integrated into mobile phone operating systems of various mobile phone manufacturers, to form a seamless connection between user requirements and application services at the operating system layer. In this way, functions of native applications (application, APP) (such as a shopping APP, a payment APP, and a map APP) can be implemented in quick applications (such as a shopping quick application, a payment quick application, and a map quick application). A quick application can have partial or complete application experience of a native APP. However, different from the native APP, the quick application does not need to be installed and can be used upon tap.

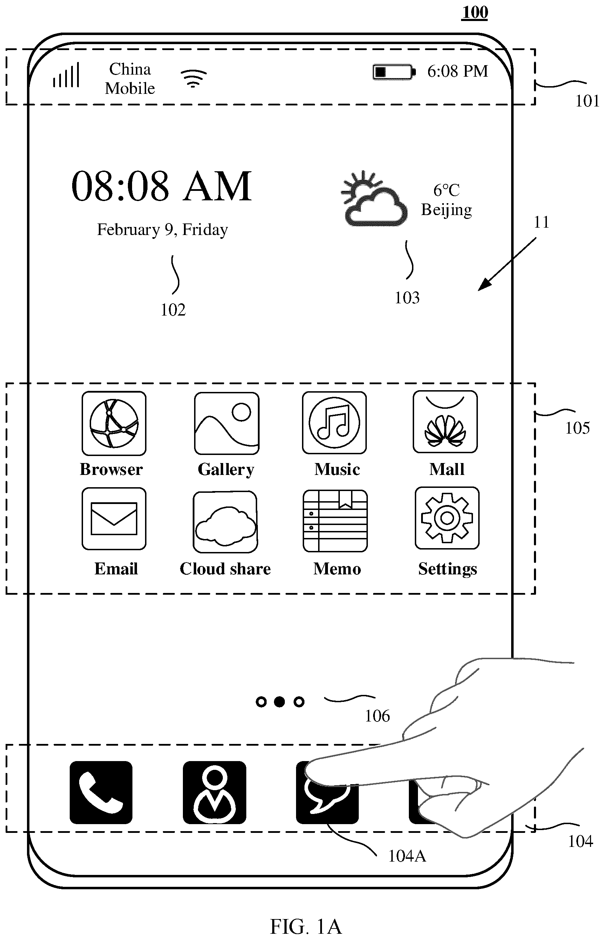

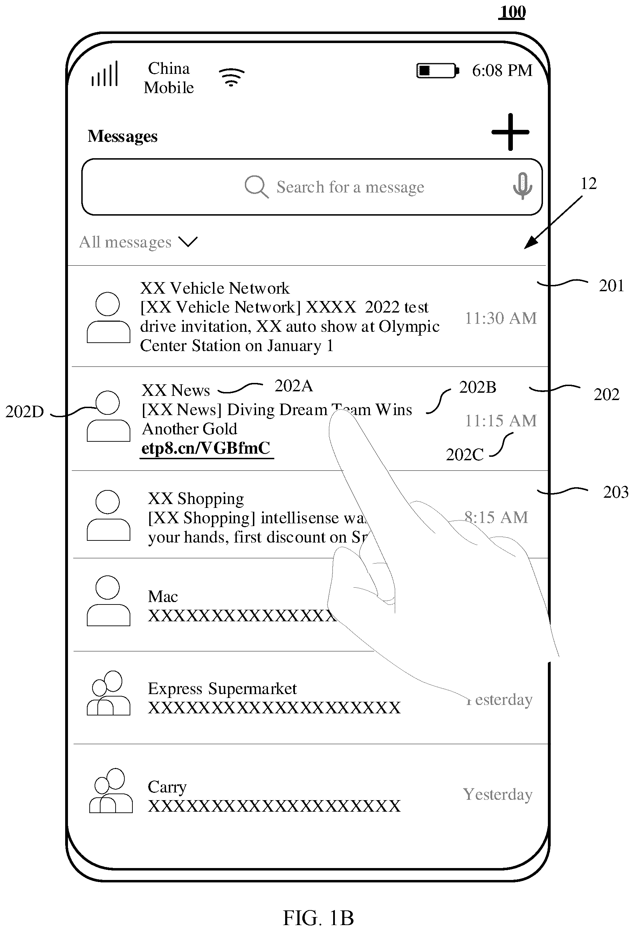

**For example,** **FIG. 1A** **and** **FIG. 1B** **are related user interfaces of a rich media short message service message according to an embodiment of this application.**

FIG. 1A shows a home screen 11 that is on a terminal device 100 and that is used to display applications installed on the terminal device 100.

The home screen 11 may include: a status bar 101, a calendar indicator 102, a weather indicator 103, a tray 104 including icons of frequently used applications, and other application icons 105.

The tray 104 including the icons of frequently used applications may display: a phone APP icon, a contact APP icon, a short message service message APP icon 104A, and a camera APP icon. The home screen 11 may further include a page indicator 106. The other application icons may be distributed in a plurality of pages, and the page indicator 106 may indicate a page in which an application currently browsed by a user is located. The user may slide left or right in a region of the other application icons, to browse an application icon in another page.

The short message service message APP icon 104A may receive an input operation (for example, a touch operation) of the user, and in response to the input operation, the terminal device 100 may display a short message service message home page 12 shown in FIG. 1B.

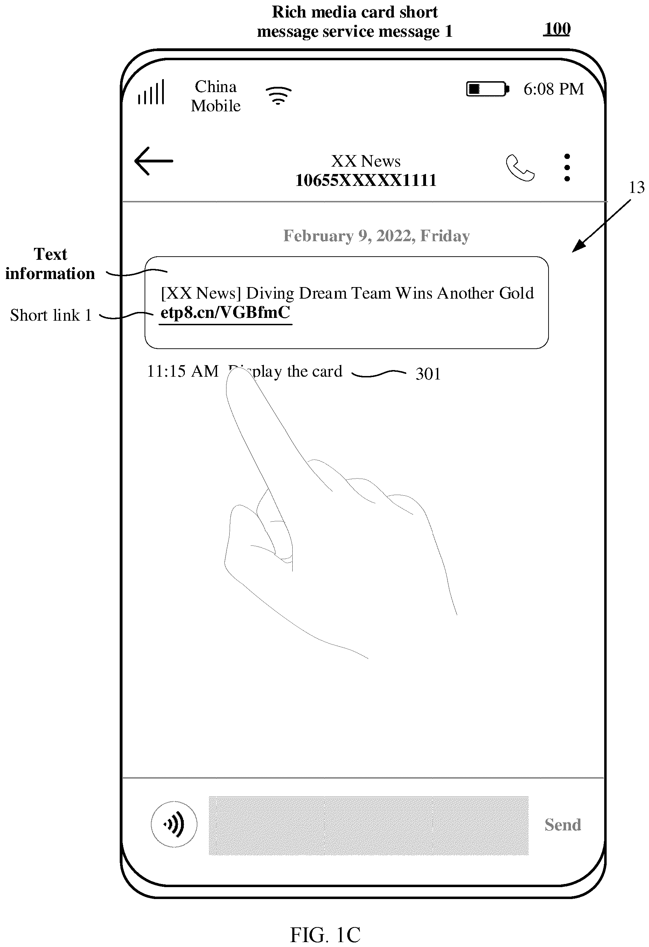

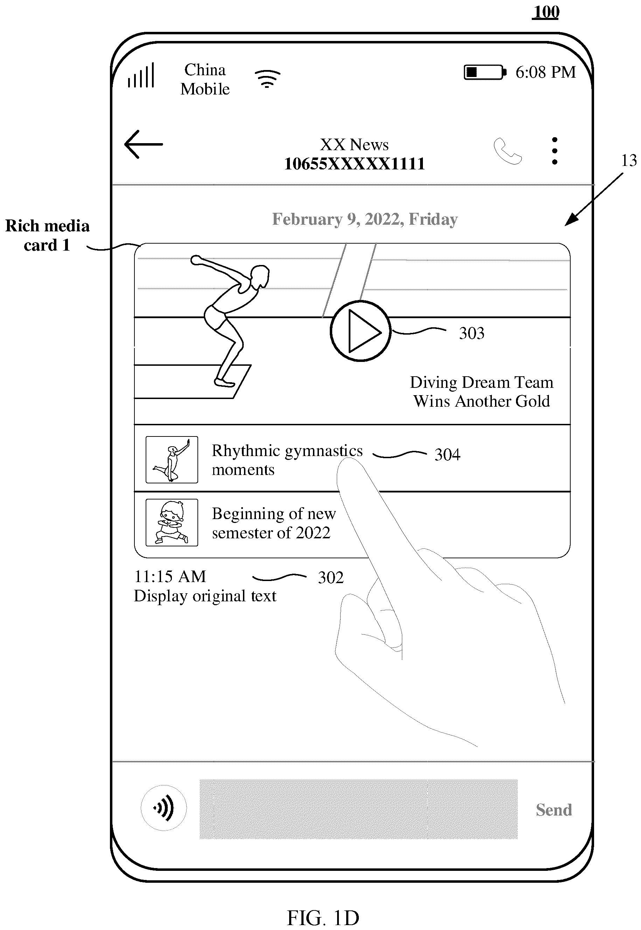

As shown in FIG. 1B, the short message service message home page 12 may include a short message service message item that corresponds to each sender and that is of a received short message service message, for example, a short message service message item 201 of XX Vehicle Network, a short message service message item 202 of XX News, or a short message service message item 203 of XX Shopping. Using the short message service message item 202 as an example, the short message service message item 202 may include a name 202A (that is, XX News) of a sender, preview information 202B of a latest short message service message of XX News, a receiving time or sending time 202C of the latest short message service message, and a profile picture 202D of the sender. The short message service message item 202 may receive an input operation (for example, a tap operation performed on the preview information 202B) of the user. In response to the input operation, the terminal device 100 may display a short message service message display interface 13 of XX News shown in FIG. 1C or FIG. 1D.

As shown in FIG. 1C, the short message service message display interface 13 includes original text information of a received rich media short message service message 1 of XX news, and a control 301 used to display a rich media card. The text information includes a short link 1 (that is, etp8.cn/VGBfmC), and the short link 1 is used to obtain a rich media card 1 associated with the rich media short message service message 1. The control 301 may receive an input operation (for example, a touch operation) of the user. As shown in FIG. 1D, in response to the input operation, the terminal device 100 may display the rich media card 1 and the control 302. The control 302 is configured to switch the rich media card 1 in the short message service message display interface 13 back to the text information shown in FIG. 1C.

In embodiments of this application, the rich media card 1 may include a picture, a video, and a text, and may further be interactive. For example, as shown in FIG. 1D, the rich media card 1 includes a play control 303 of a video component and a text "rhythmic gymnastics moments" 304, and the text "rhythmic gymnastics moments" may be a news title. The user taps the play control 303, and in response to the tap operation of the user, the terminal device 100 may play a video by using the video component of the rich media card 1. The user taps the text 402, and in response to the tap operation of the user, the terminal device 100 may obtain and display a news web page of "rhythmic gymnastics moments" in a browser APP based on a URL link associated with the text 402.

This is not limited to the invoking manner shown in FIG. 1A to FIG. 1D. In embodiments of this application, the short message service message display interface 13 that includes the rich media card 1 and that is shown in FIG. 1D may be invoked in another manner. This is not specifically limited herein. For example, after receiving the rich media short message service message 1, the terminal device 100 displays the preview information of the rich media short message service message 1 in a notification bar. After the user taps the preview information that is of the rich media short message service message 1 and that is in the notification bar, the terminal device 100 displays the short message service message display interface 13 that includes the rich media card 1 and that is shown in FIG. 1D.

However, that the short message service message APP displays the rich media card associated with the rich media short message service message and supports an interaction function of the rich media card depends on a rich media capability of the short message service message APP of the terminal device. The rich media capability of the short message service message APP includes a capability of rendering a specified component (for example, a static picture, a dynamic picture, a video, a horizontal scroll picture, a carousel picture, or a voting form) in the rich media card and a capability of implementing a specified interaction function (for example, jumping to a browser, jumping to a preset APP, jumping to a quick application (quick application, quick APP), replying to a short message service message, dial, and positioning and navigation) in the rich media card. After the terminal device obtains card data of the rich media card 1 corresponding to the short link 1, the rich media card 1 can be displayed based on the card data only when the short message service message APP of the terminal device has all rich media capabilities required by the rich media card 1. However, when "the short message service message APP of the terminal device has only some rich media capabilities required by the rich media card, or does not have rich media capabilities required by the rich media card", the short message service message APP of the terminal device cannot display the rich media card 1.

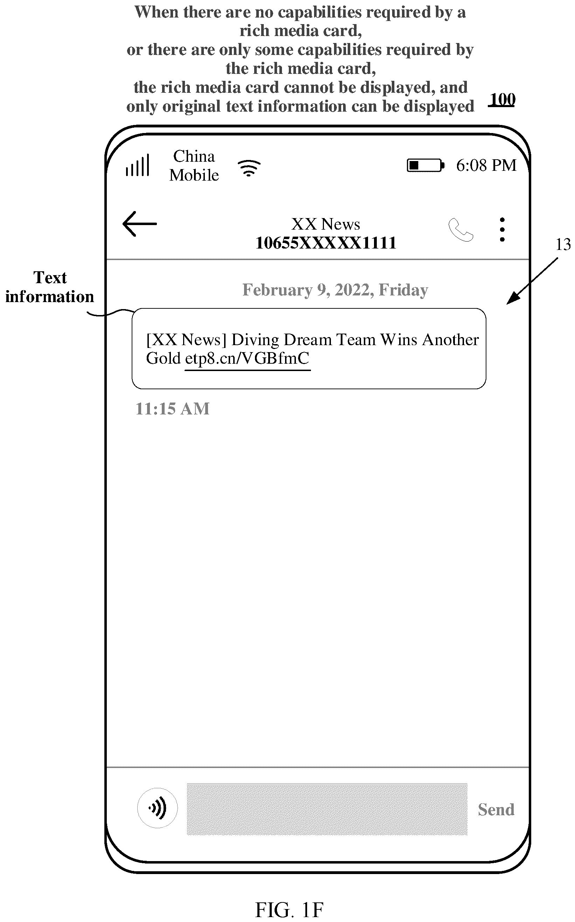

In an implementation, in the foregoing case, the short message service message APP of the terminal device can display only the original text information of the rich media short message service message. For example, as shown in FIG. 1F, the short message service message APP of the terminal device 100 has only some rich media capabilities required by the rich media card 1, and the short message service message display interface 13 of XX News in the short message service message APP of the terminal device 100 can display only the original text information 1 of the rich media short message service message 1, but cannot display the rich media card 1 associated with the rich media short message service message 1.

It may be understood that an enterprise delivers a rich media short message service message to the terminal device 100. However, limited by a rich media capability of the short message service message APP, the terminal device 100 cannot display a rich media card associated with the rich media short message service message, and a user can only view original text information of the rich media short message service message. This leads to poor user experience. In addition, a cost of a rich media short message service message is higher than that of a text short message service message. This also wastes fees of the rich media short message service message, especially when a same rich media short message service message is delivered to a large quantity of different terminal devices.

An embodiment of this application further provides a rich media information processing method. A terminal device can obtain a rich media short message service message corresponding to a rich media card in a rich media capability range of a first APP (for example, a short message service message APP) of the terminal device, and displays the rich media card in the first APP and supports all interaction functions of the rich media card, to effectively improve user experience.

**The following describes a rich media information processing system to which the foregoing rich media information processing method is applied.**

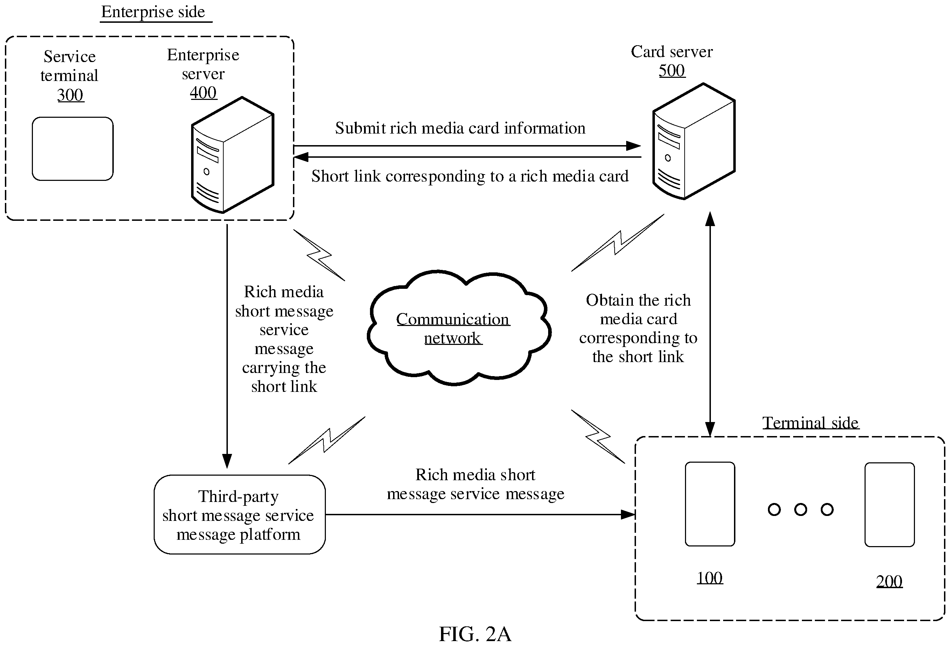

FIG. 2A is an example of a diagram of a system architecture of a rich media information processing system 10 according to an embodiment of this application. As shown in FIG. 2A, the rich media information processing system 10 includes a terminal device (for example, a terminal device 100 or a terminal device 200) on a terminal side, a service device (for example, a service terminal 300 or a service server 400) and a card server 500 that are on an enterprise side, and may further include a third-party short message service message platform.

Each terminal device on the terminal side is configured to report a rich media capability set of the first APP (for example, the short message service message APP) to the card server 500. A rich media capability library in the card server 500 is configured to store a rich media capability set reported by each terminal device. The following uses the terminal device 100 as an example for description. A rich media capability set 1 reported by the terminal device 100 includes one or more rich media capabilities.

A staff member may submit, to the card server 500 by using the service device (that is, the service terminal 300 or the service server 400), card parameters of an original rich media card corresponding to a rich media message (for example, a rich media short message service message) intended to be delivered, and a device identifier 1 (for example, a current phone number of the terminal device 100) of the terminal device 100 on a receiving side.

An adaptive conversion module in the card server 500 is configured to: adaptively degrade a capability of a component in the original rich media card (for example, a video component is degraded to a static picture component, and a capability of jumping to a preset APP is degraded to a capability of jumping to a browser) based on the rich media capability set 1 reported by the terminal device 100 indicated by the device identifier 1, generate a first rich media card in a range of the rich media capability set 1, and store the first rich media card. The card server 500 generates and feeds back a label (for example, a short link 1) of the first rich media card to the service device.

The service device is further configured to deliver a rich media message including the label of the first rich media card to the terminal device 100.

After receiving the rich media message, the terminal device 100 may obtain, from the card server 500, the first rich media card corresponding to the label. The terminal device 100 may display the first rich media card in the rich media capability range by using the first APP. The rich media message includes text information, and may further include information in another format. This is not specifically limited herein.

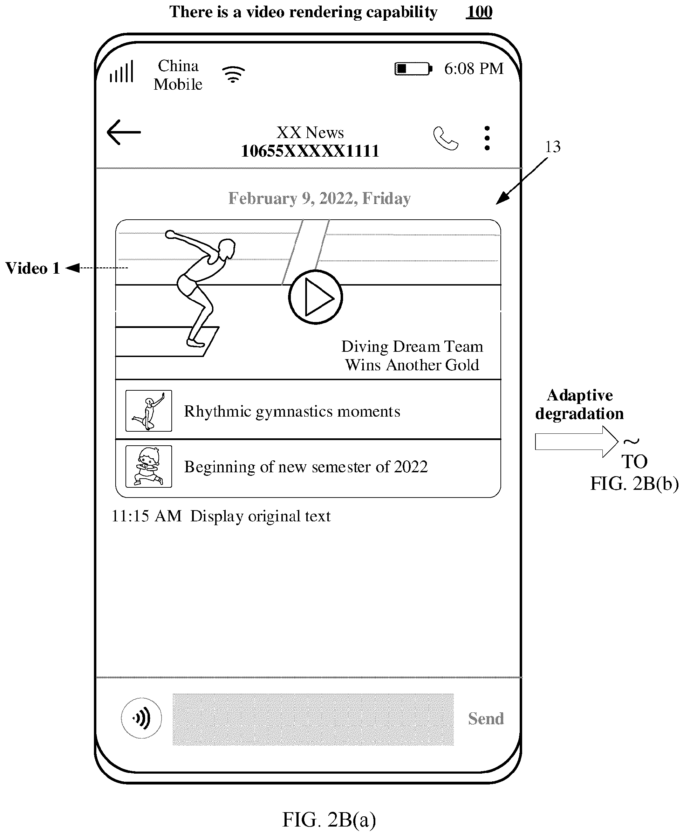

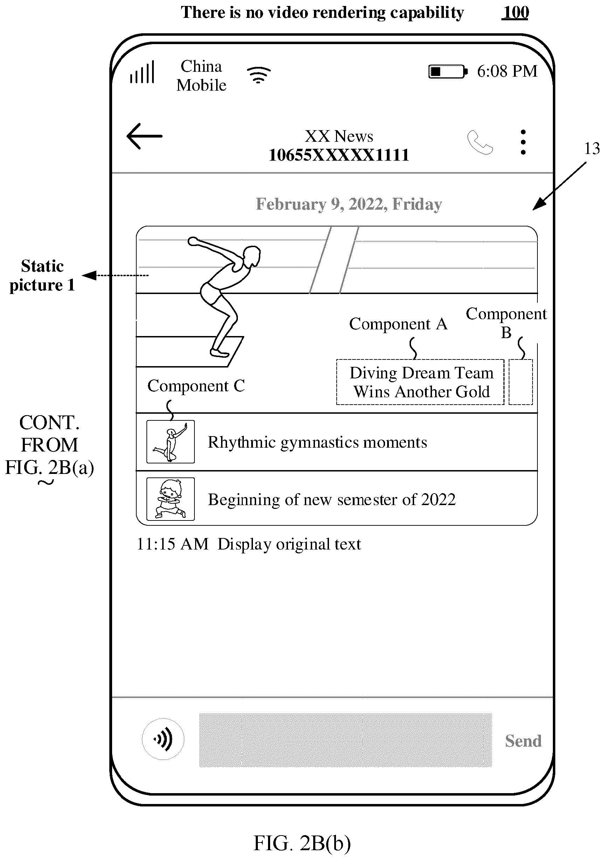

For example, the original rich media card submitted by the service terminal 300 includes a video component, and display content of the video component is a video 1. When the rich media capability set 1 of the terminal device 100 includes a video rendering capability, the rich media card generated by the card server 500 based on the rich media capability set 1 includes the foregoing video component. The terminal device 100 finally obtains and displays the rich media card shown in FIG. 2B(a). When the rich media capability set 1 of the terminal device 100 does not include a video rendering capability, but includes a static picture rendering capability, the card server 500 degrades the video component to a static picture component based on the rich media capability set 1. Display content of the static picture component may be one frame of an image (that is, a static picture 1) in the video 1. The terminal device 100 finally obtains and displays the rich media card obtained through degradation shown in FIG. 2B(b).

In some embodiments, the first APP is a short message service message APP, the rich media message is a rich media short message service message including the label, and the service terminal 300 delivers the rich media short message service message to the terminal device 100 by using the third-party short message service message platform.

In embodiments of this application, the device identifier of the terminal device may include a user identity (identity, ID) and/or a device ID. The user ID may be a phone number or a login account of the first APP. The device ID may include one or more of the following: an international mobile equipment identity (International Mobile Equipment Identity, IMEI), a mobile equipment identifier (Mobile Equipment Identifier, MEID), a unique device identifier (Unique Device Identifier, UDID), a universally unique identifier (Universally Unique Identifier, UUID), an identifier for advertising (Identifier For Advertising, IDFA), and an open anonymous device identifier (Open Anonymous Device Identifier, OAID).

In subsequent embodiments, the rich media information processing method provided in embodiments of this application is described by using an example in which "the first APP is a short message service message APP, the rich media message is a rich media short message service message, and the device identifier of the terminal device is a phone number".

In embodiments of this application, the devices in the rich media information processing system 10 may perform communication by using one or more communication networks 500. The communication networks 500 may include local area networks (local area networks, LAN), and wide area networks (wide area networks, WAN), for example, the Internet. The communication network 500 may be implemented by using any known network communication protocol. The network communication protocol may be various wired or wireless communication protocols, for example, the Ethernet, a universal serial bus (universal serial bus, USB), a firewire (firewire), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), a communication protocol supporting a network slice architecture, or any other suitable communication protocol. This is not specifically limited herein.

The devices in the rich media information processing system 10 may be deployed on land, including indoor, outdoor, handheld, or vehicle-mounted devices, or may be deployed on a water surface; or may be deployed on an aircraft and a satellite in air. This is not limited in embodiments of this application.

It should be understood that FIG. 2A is merely a diagram of a system structure of the rich media information processing system 10 according to an embodiment of this application, and does not constitute a specific limitation on the rich media information processing system 10. The rich media information processing system 10 may include more or fewer devices than those shown in the figure, for example, may further include a wireless relay device and a wireless backhaul device (not shown in FIG. 2A). This is not limited herein.

**The following uses the terminal device 100 as an example to describe a structure of the terminal device provided in this embodiment of this application.**

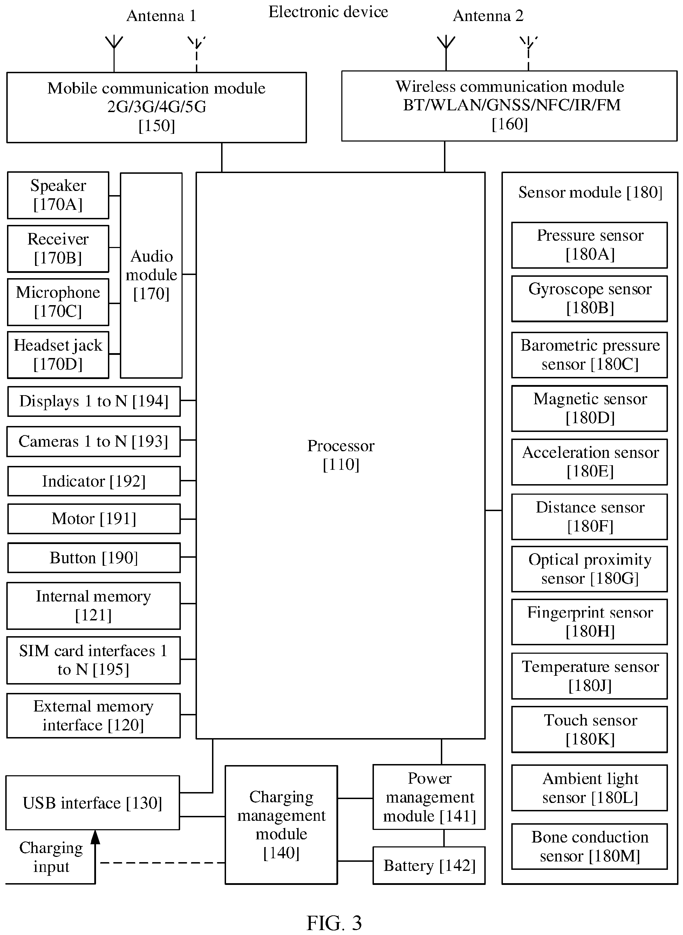

FIG. 3 is a diagram of a structure of the terminal device 100. The terminal device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device, and a specific type of the terminal device is not limited in embodiments of this application. The terminal device may carry iOS, Android, Microsoft, or another operating system. This is not specifically limited herein.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache. The memory may store instructions or data that has just been used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger by using the USB interface 130. In some embodiments of wireless charging, the charging management module 140 may receive a wireless charging input by using a wireless charging coil of the terminal device 100. The charging management module 140 may further supply power to the terminal device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and disposed in a same component as the mobile communication module 150 or another functional module.

The wireless communication module 160 may provide a solution applied to the terminal device 100 for wireless communication including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave for radiation by using the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The terminal device 100 implements a display function by using the GPU, the display 194, the application processor, and the like. For example, a home screen, a user interface of a short message service message APP, a user interface of another third-party APP, and the like are displayed on the display 194, and a rich media card associated with a rich media short message service message in embodiments of this application is displayed on the user interface of the short message service message application. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information. For example, the mobile communication module of the terminal device 100 receives card data of a rich media card from a card server 400, and transfers the card data to the GPU in the processor 110. The GPU performs graphics rendering based on the card data and the like, to generate a to-be-displayed rich media card.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Mini-Led, a Micro-Led, a Micro-oLed, a quantum dot light emitting diode (quantum dot light emitting diodes, QLED), or the like. In some embodiments, the terminal device 100 may include one or N displays 194, where N is a positive integer greater than 1.

The terminal device 100 may implement a shooting function by using the ISP, the camera 193, the video codec, the GPU, the display 194, the application processor, and the like.

The ISP is configured to process data fed back by the camera 193. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for conversion into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy, and the like.

The video codec is configured to compress or decompress a digital video. The terminal device 100 may support one or more video codecs. In this way, the terminal device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, facial recognition, speech recognition, or text understanding of the terminal device 100 may be implemented by using the NPU.

The internal memory 121 may include one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM generally referred to as DDR5 SDRAM), or the like. The non-volatile memory may include a magnetic disk storage device and a flash memory (flash memory).

According to an operating principle, the flash memory may be classified into a NOR FLASH, a NAND FLASH, a 3D NAND FLASH, and the like; based on potential orders of memory cells, the flash memory may be classified into a single-level cell (single-level cell, SLC), a multi-level cell (multi-level cell, MLC), a triple-level cell (triple-level cell, TLC), a quad-level cell (quad-level cell, QLC), and the like; and based on storage specifications, the flash memory may be classified into a universal flash storage (English: universal flash storage, UFS), an embedded multimedia card (embedded multimedia card, eMMC), and the like.

The random access memory may be directly read and written by the processor 110, may be configured to store executable programs (such as machine instructions) of an operating system or another running program, and may also be configured to store data of users and applications.

The non-volatile memory may also store the executable programs, the data of the users and the applications, and the like, and may be loaded into the random access memory in advance, to be directly read and written by the processor 110.

The external memory interface 120 may be configured to connect to an external non-volatile memory, to expand a storage capability of the terminal device 100. The external non-volatile memory communicates with the processor 110 through the external memory interface 120, to implement a data storage function. For example, files such as music and videos are stored in the external non-volatile memory.

The terminal device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor.

The gyroscope sensor 180B may be configured to determine a motion posture of the terminal device 100. In some embodiments, an angular velocity of the terminal device 100 around three axes (that is, axes x, y, and z) may be determined by using the gyroscope sensor 180B.

The barometric pressure sensor 180C is configured to measure barometric pressure.

The magnetic sensor 180D includes a Hall sensor.

The acceleration sensor 180E may detect magnitudes of accelerations of the terminal device 100 in various directions (generally three axes). When the terminal device 100 is still, a magnitude and a direction of gravity can be detected. The acceleration sensor 180E may be further configured to recognize a posture of the terminal device.

The distance sensor 180F is configured to measure a distance. The terminal device 100 may measure a distance in an infrared manner or a laser manner.

The optical proximity sensor 180G may include, for example, a light emitting diode (LED) and an optical detector, such as a photodiode.

The ambient light sensor 180L is configured to sense luminance of ambient light. The terminal device 100 may adaptively adjust luminance of the display 194 based on the sensed luminance of the ambient light.

The fingerprint sensor 180H is configured to acquire a fingerprint.

The temperature sensor 180J is configured to detect a temperature. In some embodiments, the terminal device 100 executes a temperature processing policy based on the temperature detected by the temperature sensor 180J.

The touch sensor 180K is also referred to as a "touch component". The touch sensor 180K may be disposed on the display 194, and the touch sensor 180K and the display 194 form a touchscreen, also referred to as a "touch screen". The touch sensor 180K is configured to detect a touch operation acting on or near the touch sensor 180K. The touch sensor may transfer the detected touch operation to the application processor, to determine a touch event type. A visual output related to the touch operation may be provided by using the display 194. In some other embodiments, the touch sensor 180K may alternatively be disposed on a surface of the terminal device 100, and at a position different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch key. The terminal device 100 may receive a key input, and generate a key signal input related to user settings and function control of the terminal device 100.

Based on the structures of the rich media information processing system and the terminal device, the following describes in detail the rich media information processing method provided in embodiments of this application.

In the rich media information processing method provided in embodiments of this application, the terminal device 100 reports the rich media capability set 1 of the short message service message APP to the card server 500; and after receiving the card parameters of the original rich media card associated with the rich media short message service message and the device identifier of the terminal device 100 that are submitted by the service device, the card server 500 generates the first rich media card in the rich media capability range of the short message service message APP based on the rich media capability set 1 reported by the terminal device 100 and the card parameters, and sends the label of the first rich media card to the service device. The service device delivers the rich media short message service message including the label to the terminal device 100; and the terminal device 100 obtains the first rich media card from the card server 500 based on the label, and displays the first rich media card in the short message service message APP. In embodiments of this application, when the short message service message APP of the terminal device 100 supports only some rich media capabilities required by the original rich media card, the card server 500 may adaptively degrade the original rich media card to a rich media card in the range of the rich media capability set 1 based on the rich media capability set 1 of the terminal device 100. In this way, the terminal device 100 can display the rich media card and support all interaction functions of the rich media card in the short message service message APP, to effectively improve user experience.

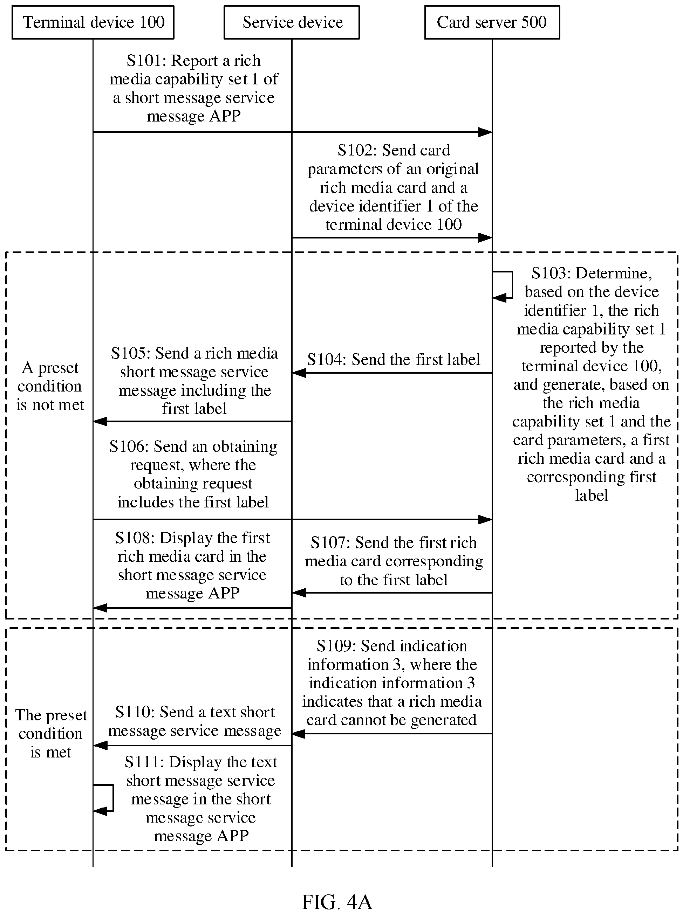

For example, FIG. 4A is a schematic flowchart of a rich media information processing method. The rich media information processing method includes but is not limited to step S101 to step S108.

S101: The terminal device 100 reports the rich media capability set 1 of the short message service message APP to the card server 500, and the card server 500 receives the rich media capability set 1 reported by the terminal device 100, and stores the rich media capability set 1 in the rich media capability library.

In this embodiment of this application, the rich media capability of the short message service message APP may include a capability of rendering a specified component (which may be referred to as a component rendering capability for short) in the rich media card and a capability of implementing a specified interaction function (which may be referred to as an interaction capability for short) in the rich media card.

In this embodiment of this application, the specified component includes but is not limited to a static picture, a dynamic picture, a video, a horizontal scroll picture, a carousel picture, a voting form, a button, and the like. The dynamic picture is a picture including a group of specific static images that are switched at a specified frequency to generate particular dynamic effect, and visual effect is similar to that of a video, for example, a Gif dynamic picture. The horizontal scroll picture includes a plurality of static pictures that are sequentially arranged and that are used to be displayed in a specified region, and only one picture can be displayed in the specified region at a same moment. The user may view, by sliding the picture displayed in the specified region left or right, another picture in the plurality of pictures that are sequentially arranged. The carousel picture includes a plurality of pictures that are automatically displayed in sequence in a specified region at a specified frequency. The voting form may include a voting title and at least two voting options, and the user may select at least one of the at least two voting options to vote.

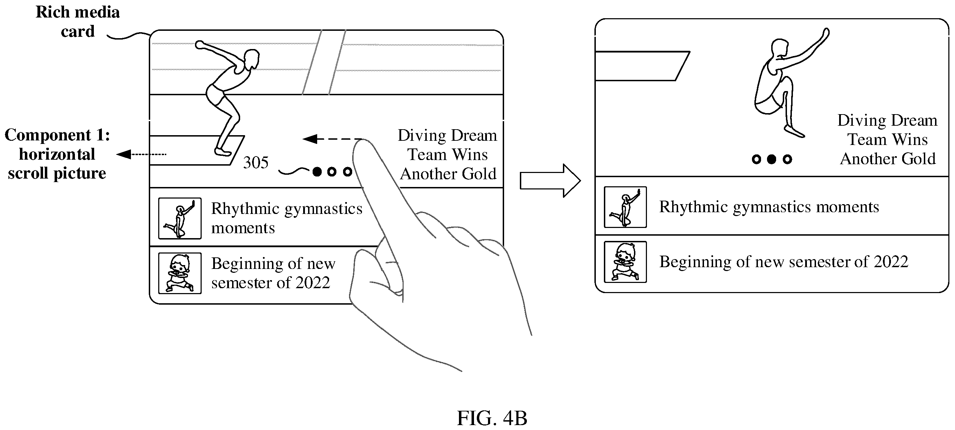

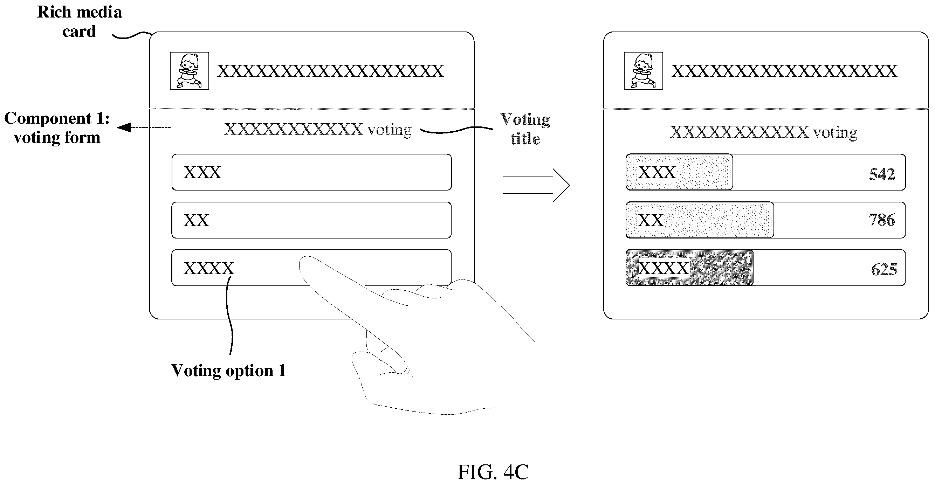

For example, FIG. 4B shows a rich media card. A component 1 in the rich media card is a horizontal scroll picture, and display content of the component 1 includes a plurality of pictures. A display region of the component 1 includes a picture indicator 305, and the picture indicator 305 may indicate a picture in the plurality of pictures that is currently displayed on the component 1. As shown in FIG. 4B, the component 1 may receive a horizontal slide operation of the user, and in response to the horizontal slide operation, the terminal device 100 may display another picture of the component 1. For example, FIG. 4C shows another rich media card. A component 1 in the rich media card is a voting form, and display content of the component 1 includes a voting title and three voting options (for example, a voting option 1). The voting option 1 may receive an input operation (for example, a touch operation) of the user, and in response to the input operation, the terminal device 100 may display a quantity of votes corresponding to each voting option.

In some embodiments, each APP is provided with a rendering module (for example, a rendering module 1 of the short message service message APP), and the rendering module is provided with a component rendering capability of the APP. Only when the rendering module is provided with a component rendering capability of a specified component, the APP can invoke a CPU and/or a GPU to draw and render the specified component (for example, a video), and the APP can implement a related service (for example, displaying and playing a video) of the specified component.

It may be understood that whether the short message service message APP has the rendering capability of the specified component depends on whether the rendering module of the short message service message APP is provided with the rendering capability of the specified component. Different APPs of a same terminal device may be provided with different component rendering capabilities. For example, if an album APP of the terminal device 100 has a video rendering capability, and the short message service message APP does not have a video drawing and rendering capability, the album APP may display and play a video, but the short message service message APP cannot display and play a video. Different versions of a same APP may also have different component rendering capabilities. For example, if a current version of the short message service message APP of the terminal device 100 does not have a video rendering capability, and a new version has a video rendering capability, the short message service message APP cannot display and play a video currently, but the short message service message APP can display and play a video after being updated.

In this embodiment of this application, interaction capabilities implemented in response to an input operation on a specified component of the rich media card may include: a jump capability of jumping from the short message service message APP to a specified APP (for example, a capability of jumping to a browser, a capability of jumping to a preset APP, a capability of jumping to a phone APP for dial, a capability of jumping to a map APP for positioning and navigation, or a capability of jumping to a native APP to share a rich media card), a jump capability 2 of jumping from the short message service message APP to a quick application (for example, jumping to a map quick application for positioning and navigation), and a jump capability 3 of jumping from a current page of the short message service message APP (that is, an activity 1 of the short message service message APP) to another page of the short message service message APP to reply to a short message service message (that is, an activity 2 of the short message service message APP). The preset APP is a native APP with a web page version other than the browser. It may be understood that the user can view the web page version of the preset APP online by using the browser.

It should be noted that, generally, only when the following conditions are met: "The short message service message APP is provided with an underlying service module (a jump module 1 fort short) for jumping to another APP, an APP 1 is provided with an underlying service module (a jump module 2 for short) for another APP to invoke this APP, and the terminal device is installed with the APP 1", the short message service message APP has a capability of jumping to the APP 1. The jump module 1 and the jump module 2 may be a same module, or may be different modules. One APP may have the jump module 1 and/or the jump module 2.

In an implementation, based on the foregoing conditions, only when a jump whitelist of the APP 1 includes the short message service message APP, the short message service message APP has the jump capability of jumping to the APP 1. It should be noted that, to implement jump between APPs, the APP 1 may register a URL scheme (protocol) with an operating system, where the scheme is used to start this application in another APP, a jump whitelist is disposed in the scheme, and the jump whitelist indicates which APPs can start this application.

In an implementation, based on the foregoing conditions, for an interaction capability of jumping to a specified APP to implement a specific interaction function (for example, the capability of jumping to the phone APP for dial, the capability of jumping to the map APP for positioning and navigation, or a capability of jumping to another APP to share the rich media card), the short message service message APP can have the foregoing interaction capability only when the short message service message APP is provided with a service logic corresponding to the foregoing specific interaction function.

It should be noted that, in some examples, the short message service message APP has the capability of jumping to the browser and the capability of jumping to the preset APP (for example, a shopping APP). In some examples, the short message service message APP does not have the capability of jumping to the preset APP (for example, a shopping APP), but has the capability of jumping to the browser. The short message service message APP may jump to a web page version of the shopping APP by using the browser.

It may be understood that the terminal device 100 may start the APP 1 by using the short message service message APP, and jump to a home page of the APP 1. The terminal device 100 may also start the APP 1 by using the short message service message APP, and jump to a specified page (that is, a specified activity) of the APP 1. For example, the APP 1 is the shopping APP, and the specified page may be a commodity details page, an order details page, a message notification page, an order payment page, or the like.

In some embodiments, the terminal device 100 is provided with a quick application center, and the quick application center may include a plurality of quick applications. Only when the quick application center includes a quick application 1, and the short message service message APP is provided with an underlying service module for invoking a quick application, the short message service message APP has a jump capability of jumping to the quick application 1.

In some embodiments, only when the short message service message APP is provided with an underlying service module for the jump capability 3, the APP can have a capability of jumping from a current page of the short message service message APP to another page of the short message service message APP to reply to a short message service message.

In this embodiment of this application, when the rich media capability of the short message service message APP of the terminal device 100 changes, the terminal device 100 may report a latest rich media capability to the card server 500; or the terminal device 100 may periodically report a latest rich media capability to the card server 500. In this way, the card server 500 updates, in the rich media capability library in time, the rich media capability set 1 of the short message service message APP of the terminal device 100. It may be understood that the rich media capability library stores a correspondence between the device identifier 1 of the terminal device 100 and the rich media capability set reported by the terminal device 100.

In this embodiment of this application, the short message service message APP of the terminal device 100 may register a rich media card service with the card server 500, and report the rich media capability set 1 by using a registration interface or a capability reporting interface. It may be understood that, only after being registered with the rich media card service, the card server 500 stores the rich media capability set of the terminal device 100, and generates a rich media card in a rich media capability range based on the rich media capability set of the terminal device 100.

In some embodiments, the short message service message APP of the terminal device 100 sends a registration request to the card server 500. The registration request is used to request to register a rich media card service and report a rich media capability. The registration request may include a user ID (for example, a phone number 1), and may further include first information. The first information indicates the rich media capability set 1 of the short message service message APP of the terminal device 100. The card server 500 may store, in the rich media capability library, a correspondence between the phone number 1 and the rich media capability set 1. In an implementation, the registration request further includes a device ID (for example, a UDID), and the card server 50 stores a correspondence between the phone number 1 and the device ID of the terminal device 100. Subsequently, the terminal device 100 reports an updated rich media capability set to the card server 500, and the updated rich media capability set may carry only the device ID.

In some embodiments, the short message service message APP of the terminal device 100 sends the registration request to the card server 500, where the registration request is only used to request to register the rich media card service, and the registration request may carry the user ID (for example, the phone number 1) and the device ID (for example, the UDID). Then, the short message service message APP of the terminal device 100 sends the first information and the device ID to the card server 500 by using the registration interface or the capability reporting interface. The card server 500 determines the phone number 1 corresponding to the device ID, and may store, in the rich media capability library, the correspondence between the phone number 1 and the rich media capability set 1. In an implementation, the registration request and the reported information may both carry the phone number, and may not carry the device ID. This is not specifically limited herein.

In an implementation, the first information sent by the terminal device 100 specifically includes an identifier (for example, a name or a number) of each rich media capability of the short message service message APP. The card server 500 may determine, based on the identifier 1 in the first information sent by the terminal device 100, that the short message service message APP of the terminal device 100 has a rich media capability corresponding to the identifier 1. For example, Table 1 shows two rich media capability sets (that is, a capability set 1 and a capability set 2). For example, the first information reported by the terminal device 100 specifically includes an identifier of each rich media capability in the capability set 2, that is, an identifier of a static picture and an identifier of a jump browser.

**Table 1**

| | Rich media capabilities | |
|---|---|---|
| | Component rendering capability | Interaction capability |
| Capability set 1 | Static picture | Jumping to a browser |
| | Video | Jumping to a preset APP |
| | Carousel picture | Replying to a short message service message |
| | Horizontal scroll picture | |
| | Voting form | Jumping to a phone APP for dial |
| | | Jumping to a map APP for positioning and navigation |
| Capability set 2 | Static picture | Jumping to a browser |

In an implementation, a plurality of capability version numbers are preset, and each capability version number corresponds to one capability set. The first information reported by the terminal device 100 specifically includes a capability version number. The card server 500 prestores a correspondence between each capability version number and a capability set. The card server 500 determines, based on the capability version number reported by the terminal device 100, that a capability set corresponding to the capability version number is the rich media capability set of the short message service message APP of the terminal device 100. For example, Table 2 shows two correspondences between capability version numbers and capability sets.

**Table 2**

| | Rich media capabilities | |
|---|---|---|
| | Component rendering capability | Interaction capability |
| Version number 1 (capability set 1) | Static picture | Jumping to a browser |
| | Video | Jumping to a preset APP |
| | Carousel picture | Replying to a short message service message |
| | Horizontal scroll picture | |
| | Voting form | Jumping to a phone APP for dial |
| | | Jumping to a map APP for positioning and navigation |
| Version number 2 (capability set 2) | Static picture | Jumping to a browser |

In this embodiment of this application, the card server 500 may store, in the rich media capability library, the correspondence between the device identifier 1 and the rich media capability set 1 of the terminal device 100; or may store, to save storage space, only a correspondence between the device identifier 1 and a capability version number. This is not specifically limited herein.

S102: The service device sends card parameters of an original rich media card and the device identifier 1 of the terminal device 100 to the card server 500, and the card server 500 receives the card parameters and the device identifier 1 that are sent by the service device.

In some embodiments, the service device (for example, the service terminal 300 or the service server 400) may select a preset rich media card template, and send card parameters corresponding to the rich media card template to the card server 500. In this embodiment of this application, the rich media card template may indicate a card layout of the rich media card. The card layout may include some or all of a card shape, a card size, and a card color, and may further include some or all of component identifiers, component names, component sizes, component types, component shapes, and component positions of all components (for example, the component 1) included in the rich media card template.

The card parameters corresponding to the rich media card template may include: a module ID of the rich media card module and component parameters of components included in the rich media card module. In this embodiment of this application, the card server 500 may obtain the corresponding rich media card module based on the module ID. In an implementation, the card server 500 may obtain a rich media module library, and obtain, from the rich media module library, a rich media card module corresponding to a specified module ID.

Using the component 1 as an example, component parameters of the component 1 may include a component name (such as an ID or a name) and display content of the component 1 in the rich media card module, and may further include at least one URL connection associated with the component 1.

In some embodiments, the display content that is of the component 1 (for example, a static picture) and that is sent by the service device may be display data of the component (for example, picture data of the static picture), or may be a download address (for example, a URL connection) of the display data of the component.

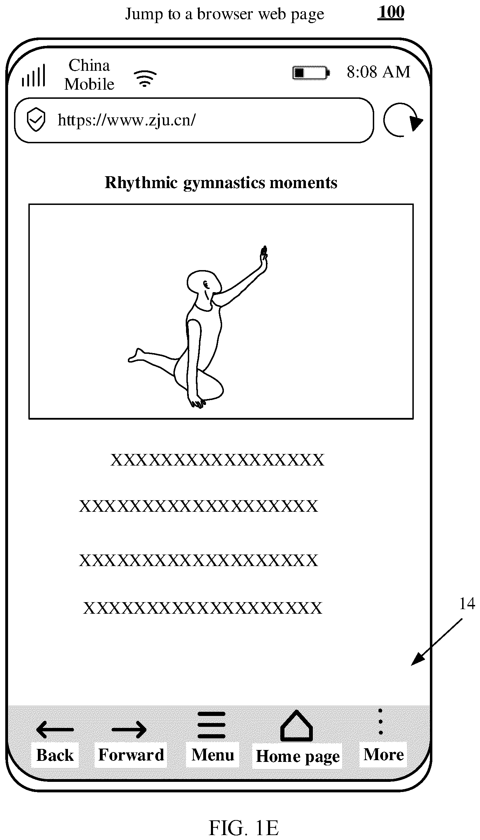

With reference to FIG. 1D and FIG. 1E, when the component 1 (that is, the text 402 shown in FIG. 1D) in the rich media card is associated with a URL link, the component 1 may receive an input operation of the user, and in response to the input operation, jump to a page indicated by the URL link associated with the component 1 (that is, a page in the browser APP shown in FIG. 1E).

In some embodiments, the component 1 may be associated with a plurality of URL links. The plurality of URL links may include one or more of the following: a URL link for jumping to a preset APP 1, a URL link for jumping to a quick application 1, a URL link for jumping to the browser, and the like. The component parameters of the component 1 may further include indication information 2, and the indication information 2 indicates a URL link 1 that is preferentially used in the plurality of URL links. In a subsequent embodiment, the card server 500 may determine, based on the rich media capability reported by the terminal device 100, which URL link in the foregoing plurality of URL links is associated with the component 1 in a finally generated first rich media card. Details are not described herein again.

In some embodiments, the service server 400 has a service input module (for example, a display, a keyboard, and/or a mouse). A staff member may submit, to the card server 500 by using the service server 400, the card parameters of the original rich media card corresponding to the rich media short message service message intended to be delivered and a device identifier of a target receiver (for example, the device identifier 1 of the terminal device 100).

In some embodiments, the staff member may submit the card parameters and the device identifier of the target receiver to the card server 500 by using the service terminal 300.

Specifically, in an implementation, the staff member may log, on the service terminal 300, in to a rich media short message service message editing system provided by the card server 500, where the rich media short message service message editing system may provide a plurality of rich media card templates; and the staff member may select a required rich media card module, and edit component parameters of each component in the rich media card module. Finally, the rich media short message service message editing system submits the card parameters (for example, a template ID of a rich media card module 1 and component parameters of each component in the rich media card module 1) and the device identifier of the target receiver (for example, the device identifier 1 of the terminal device 100) to the card server 500.

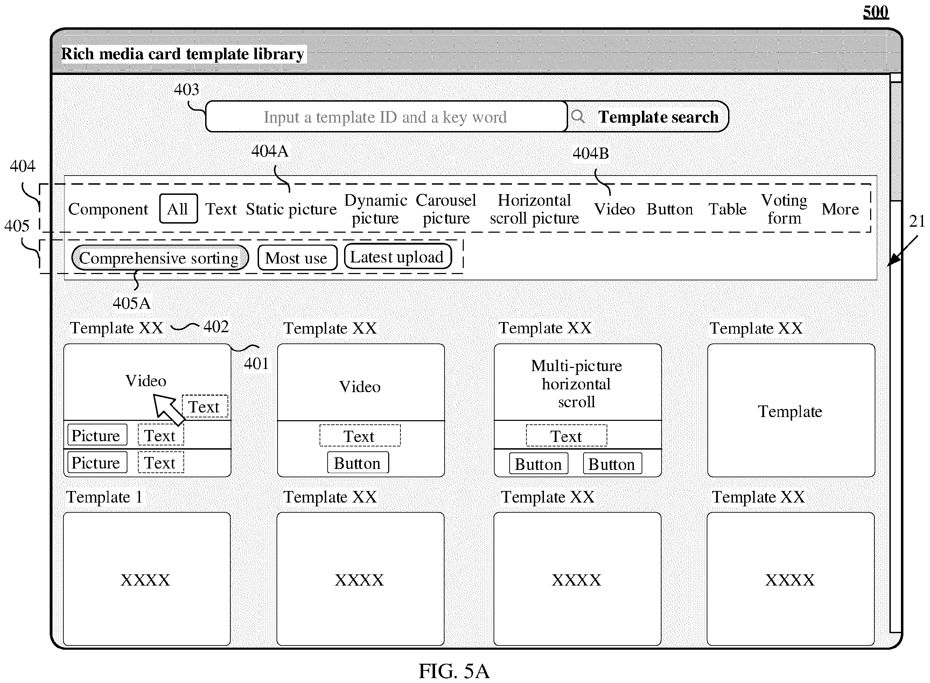

For example, FIG. 5A to FIG. 5E show related user interfaces in which a rich media card template is selected and edited in the service terminal 300.

For example, after logging, on the service terminal 300, in to the rich media short message service message editing system, the staff member invokes a rich media card template library provided by the rich media short message service message editing system, and the service terminal 300 displays a user interface 21 shown in FIG. 5A. As shown in FIG. 5A, the user interface 21 includes a plurality of rich media card templates (for example, a rich media card template 201) and a template ID (for example, a template ID 202 of the rich media card template 201) of each rich media card template. The rich media card template 201 includes one video component, two text components, and two static picture components.

As shown in FIG. 5A, in an implementation, the user interface 21 may further include one or more of a search box 403, a component classification option 404, and a sorting option 405.

The search box 403 is used to receive a template ID or a key word entered by the user. The service terminal 300 may obtain a rich media card template corresponding to the template ID or the key word in the search box 403, and display the rich media card template in the user interface 21. The component classification option 404 includes a plurality of component options, for example, a static picture option 404A, a dynamic picture option, and a video option 404B. The user may select one or more component options (for example, the option 404A and the option 404B) in the component classification option 404. The service terminal 300 displays, in the user interface 21, only a rich media card template including the one or more component options. The sorting option 405 includes options of a plurality of sorting manners, for example, a comprehensive sorting option 405A, a sorting option of most use, and a sorting option of latest upload. For example, as shown in FIG. 5A, when the comprehensive sorting option 405A in the sorting option 405 is selected, a sorting manner of rich media card templates in the user interface 21 is comprehensive sorting.

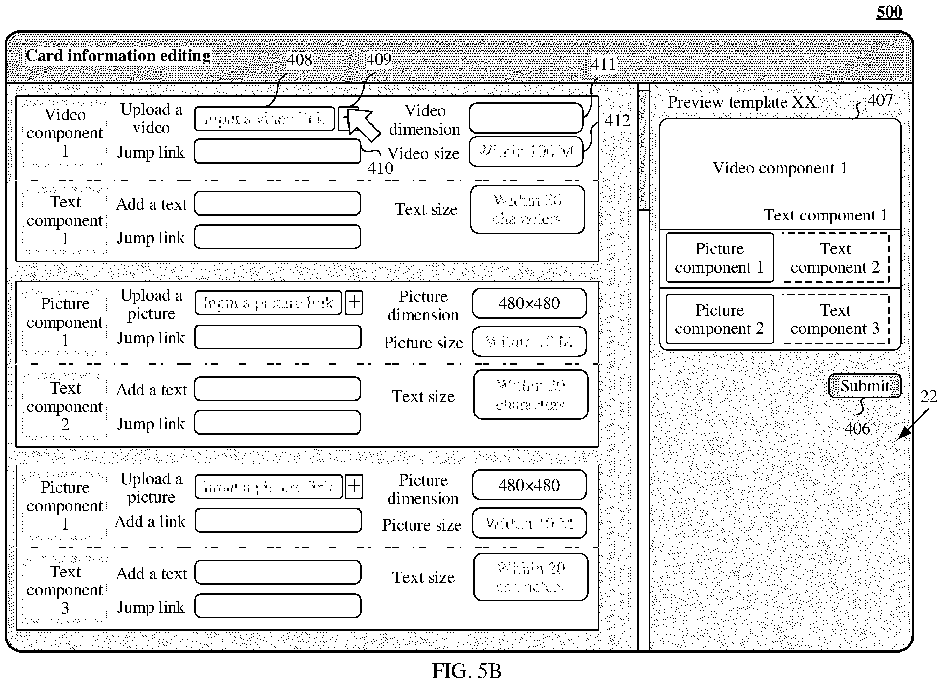

As shown in FIG. 5A and FIG. 5B, the rich media card template 201 may receive an input operation (for example, a tap operation) of the user, and in response to the input operation, the terminal device 100 displays a user interface 22 shown in FIG. 5B. The user interface 22 is used to edit component parameters of the rich media card template 201. The user interface 22 may include an editing region of each component of the rich media card template 201, a submission control 406, and a preview card 407. The submission control 406 is used to submit, to the rich media short message service message editing system, the component parameters of the rich media card template 201 edited by the user. The preview card 407 is used to display display effect of the rich media card based on the component parameters of the rich media card template 201 edited by the user.

Using a video component 1 in the rich media card template 201 as an example, an editing region of the video component 1 in the user interface 22 includes an address box 408 and/or an add control 409 of display content, and may further include a jump link box 410, a video dimension 411, and a video size 412. The address box 408 is used to input a URL link 1 of the display content of the video component 1, where the URL link 1 indicates a download address of a video file. In this embodiment of this application, the card server 500 and/or the terminal device 100 may obtain the video file based on the URL link 1. The add control 409 is used to add a local video file. After the user uploads the video by using the address box 408 or the add control 409, the video dimension 411 indicates a display dimension of the video uploaded by the user, and the video size 412 indicates an information amount of the video uploaded by the user. With reference to FIG. 5B, before the user uploads the video, the video size 412 may further indicate a maximum amount of information (for example, 100 megabytes (M)) of a video that can be uploaded. The jump link box 410 is used to input a URL link 2 that is associated with the video component 1 and that is used for page jump. For example, the URL link 2 indicates an address of a user interface 1 of the APP 1.

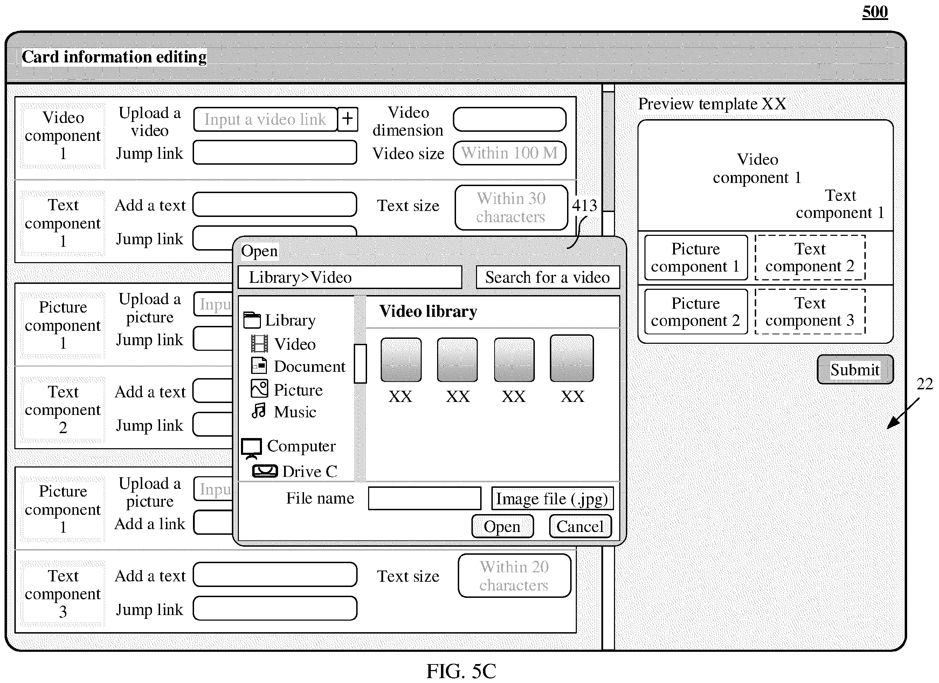

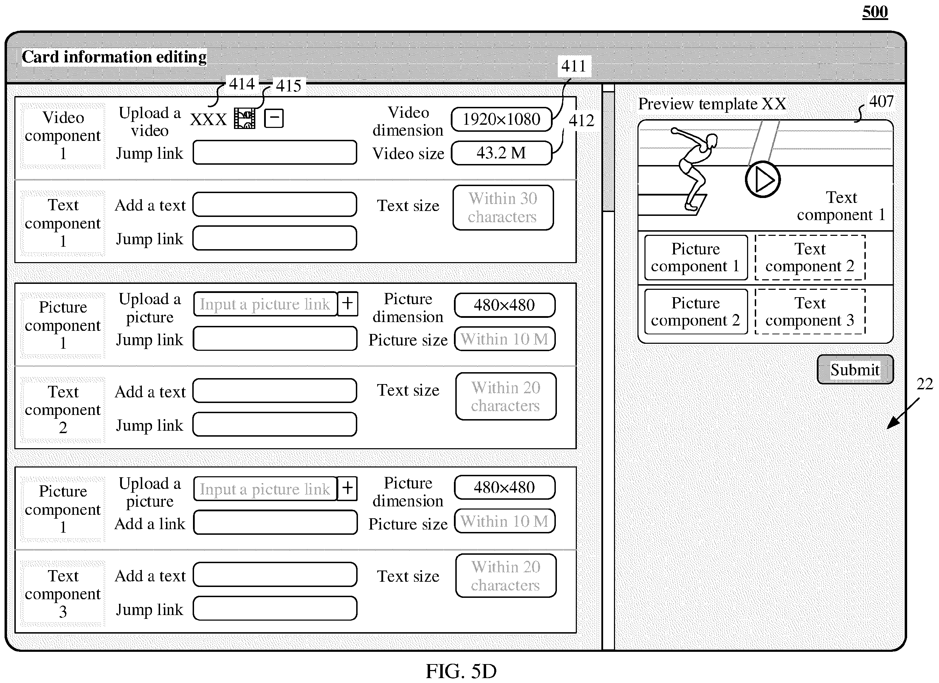

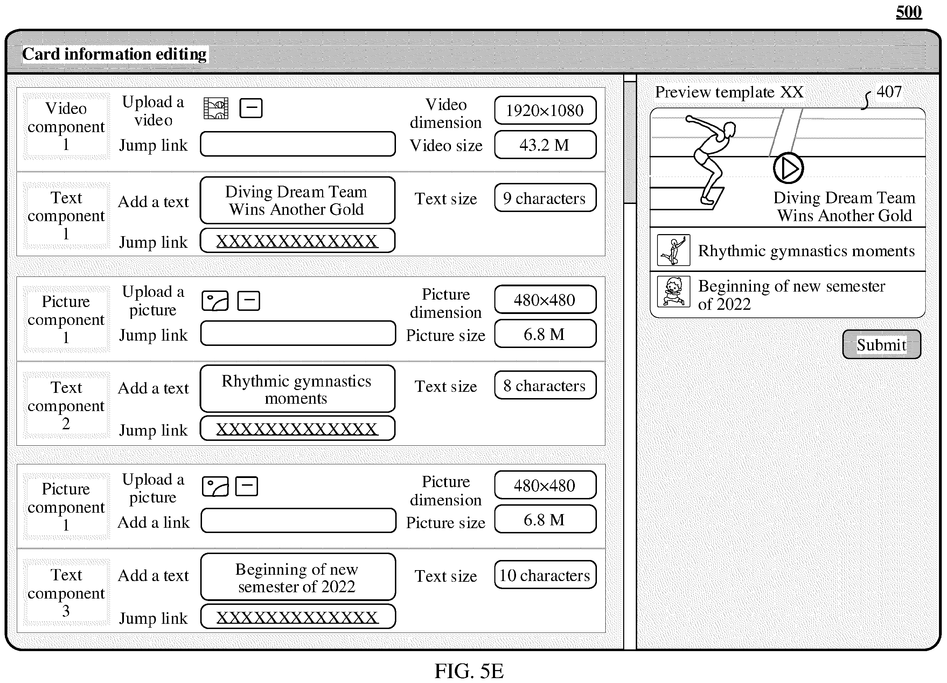

For example, the add control 409 may receive an input operation (for example, a touch operation) of the user. In response to the input operation, the service terminal 300 may display a selection box 413 of a local file shown in FIG. 5C, and the user may search for and select a required video file by using the selection box 413. As shown in FIG. 5D, after the user selects the required video file by using the selection box 413, the service terminal 300 displays a name 414 and/or an icon 415 of the video file, displays a video dimension of the video file in the video dimension 409, displays an information amount of the video file in the video size 412, and displays a video cover and a play control of the video file in a display region of the video component 1 of the preview card 407. As shown in FIG. 5E, after the user edits the component parameters of each component, the preview card 407 displays display effect of the original rich media card required by the user.

In some embodiments, the rich media short message service message editing system further provides a function of customizing a rich media card template. The staff member may design a dedicated rich media card template by using the foregoing customization function, for example, customizing a card color and a position of each component in the card. This is not specifically limited herein.

S103: The card server 500 determines, based on the device identifier 1, the rich media capability set 1 reported by the terminal device 100, and generates, based on the rich media capability set 1 and the card parameters, the first rich media card in a range of the rich media capability set 1 and a first label of the first rich media card.

After receiving the device identifier 1 and the card parameters, the card server 500 finds, through querying in the rich media capability library, the rich media capability set 1 corresponding to the device identifier 1, and determines, based on the card parameters, a rich media capability required by each component of the original rich media card required by the service device. When the rich media capability set 1 does not include a rich media capability 1 required by the component 1 of the original rich media card, adaptive capability degradation may be performed on the component based on a preset capability degradation relationship. After adaptive degradation is performed on each component of the original rich media card, the card server 500 generates the first rich media card in the range of the rich media capability set 1 and the first label of the first rich media card, and stores a correspondence between the first label and the first rich media card. The label may be a card ID, a card name, or a short link. This is not specifically limited herein.

In an implementation, the card server 500 may determine a required component rendering capability based on a component type of each component in the card parameters. For example, it is determined, based on the card parameters, that the original rich media card includes the video component 1, and the video component requires a video rendering capability. The card server 500 may determine, based on a jump link associated with each component in the card parameters, an interaction capability required by the component. For example, it is determined, based on the card parameters, that a jump link of the component 1 in the original rich media card is a URL link 1. The card server 500 parses the URL link 1, determines that the URL link 1 is used to jump to the preset APP 1, and further determines that the component 1 requires a capability of jumping to the preset APP 1. For example, it is determined, based on the card parameters, that the jump link of the component 1 in the original rich media card includes a plurality of URL links, and a URL link that is preferentially used in the plurality of URL links is the URL link 1. The card server 500 determines that the URL link 1 is used to jump to the preset APP 1, and further determines that the component 1 requires a capability of jumping to the preset APP 1.

For example, Table 3 shows some capability degradation relationships provided in this embodiment of this application. As shown in Table 3, a rich media capability A may be degraded to a rich media capability B. As shown in Table 3, that the rich media capability A is empty means that the rich media capability A cannot be degraded to another rich media capability.

**Table 3**

| | Preset capability degradation relationship | |
|---|---|---|
| | Rich media capability A | Rich media capability B |
| Degradation of component rendering capabilities | Dynamic picture, horizontal scroll picture, or video | Static picture |
| | Carousel picture | Horizontal scroll picture |
| | Static picture | (Empty) |
| | Voting form | (Empty) |
| Degradation of interaction capabilities | Jumping to a preset APP | Jumping to a browser |
| | Jumping to a browser | (Empty) |
| | Jumping to a phone APP for dial | (Empty) |
| | Jumping to a map APP for positioning and navigation | (Empty) |
| | Jumping to another page to reply to a short message service message | (Empty) |

In some embodiments, with reference to Table 3, it is determined, based on the preset capability degradation relationship, that the rich media capability 1 may be degraded to a rich media capability 2. When the rich media capability set 1 does not include the rich media capability 1, but includes the rich media capability 2, the rich media capability 1 of the component 1 is degraded to the rich media capability 2. For example, with reference to Table 3, a dynamic picture rendering capability, a horizontal scroll picture rendering capability, and a video rendering capability may all be degraded to a static picture rendering capability.

It should be noted that, if the rich media capability 1 of the component 1 is the component rendering capability, and the rich media capability 1 (for example, the video rendering capability) is degraded to the static picture rendering capability, a component type of the component is degraded from a video component to a picture component, and display content of the component after degradation is one frame of a static image in display content (that is, a video) of the component 1. If the rich media capability 1 of the component 1 is a carousel picture rendering capability, when the carousel picture rendering capability is degraded to a horizontal scroll picture rendering capability, the component type of the component is degraded from a carousel picture component to a horizontal scroll picture component. Display content of the component after degradation remains unchanged, and a display manner of a plurality of pictures corresponding to the component is changed from carousel display to horizontal scroll display.

It should be noted that, if the rich media capability 1 of the component 1 is the capability of jumping to the preset APP (for example, a shopping APP), it is determined, based on the preset capability degradation relationship, that the rich media capability 1 may be degraded to the rich media capability 2 (for example, the capability of jumping to the browser). Only when the rich media capability set 1 does not include the rich media capability 1, but includes the rich media capability 2, and a jump link associated with the component 1 includes a URL link of the rich media capability 2 (for example, the URL link for jumping to the browser), the rich media capability 1 of the component 1 can be degraded to the rich media capability 2, and a URL link of the rich media capability 1 (for example, a URL link for jumping to the preset APP) can be deleted.

In some embodiments, with reference to Table 3, it is determined, based on the preset capability degradation relationship, that the rich media capability 1 may be degraded to the rich media capability 2, and the rich media capability 2 may be degraded to a rich media capability 3. When the rich media capability set 1 does not include the rich media capability 1 and the rich media capability 2, but includes the rich media capability 3, the rich media capability 1 of the component 1 is degraded to the rich media capability 3. By analogy, the rich media capability 1 may be sequentially degraded for a plurality of times based on the preset capability degradation relationship. For example, with reference to Table 3, the carousel picture rendering capability may be degraded to the horizontal scroll picture rendering capability, and the horizontal scroll picture rendering capability may be degraded to the static picture rendering capability.

It should be noted that, when it is determined, based on the preset capability degradation relationship, that the rich media capability 1 may be finally degraded to the rich media capability 2, and the rich media capability set 1 does not include the rich media capability 2, the rich media capability 1 is continuously degraded to empty. For example, with reference to Table 3, the carousel picture rendering capability may be degraded to the horizontal scroll picture rendering capability, and the horizontal scroll picture rendering capability may be degraded to the static picture rendering capability. When the rich media capability set 1 does not include the horizontal scroll picture rendering capability and the static picture rendering capability, the carousel picture rendering capability of the component 1 is finally degraded to empty.

In some embodiments, with reference to Table 3, the rich media capability 1 of the component 1 is a component rendering capability (for example, the static picture rendering capability), and it is determined, based on the preset capability degradation relationship and the rich media capability set 1, that the rich media capability 1 is finally degraded to empty. In an implementation 1, when it is determined that the rich media capability 1 is finally degraded to empty, the display content of the component is degraded to empty (for example, the display content in the component parameters of the component is deleted). In an implementation 2, when it is determined that the rich media capability 1 is finally degraded to empty, if the component parameters indicate that the component 1 is associated with the URL link 1, the display content of the component 1 is replaced with the URL link 1 or a replacement text that is indicated by the component parameters. In an implementation 3, when it is determined that the rich media capability 1 is finally degraded to empty, the component 1 is deleted, that is, all component parameters (including the display content and the jump link of the component) of the component 1 are deleted.

It may be understood that, in the implementation 1 and the implementation 2, if the rich media capability set 1 includes an interaction capability (for example, the capability of jumping to the browser) indicated by the component parameters of the component 1, the component 1 in the degraded rich media card still has the foregoing interaction capability; and in the implementation 3, the degraded rich media card does not include the component 1, and naturally does not have the foregoing interaction capability.

For example, with reference to Table 3, the rich media capability 1 of the component 1 is the static picture rendering capability. After the rich media capability 1 is degraded, a display region of the component may be a blank region. For example, with reference to Table 3, the rich media capability 1 of the component 1 is a voting form rendering capability, and the voting form rendering capability may be degraded to empty based on the preset capability degradation relationship. When the component parameters of the component 1 indicate that the component 1 is associated with a jump link (for example, the URL link 1 of a voting web page in the browser), degrading the voting form rendering capability to empty specifically includes: replacing the display content of the component 1 with a voting title in the voting form, where the degraded component 1 is associated with the URL link 1. When the component parameters of the component 1 indicate that the component 1 is not associated with a jump link, degrading the voting form rendering capability to empty specifically includes: deleting the component 1.

In some embodiments, with reference to Table 3, the rich media capability 1 of the component 1 is an interaction capability (for example, the capability of jumping to the browser), and it is determined, based on the preset capability degradation relationship and the rich media capability set 1, that the rich media capability 1 is finally degraded to empty. In an implementation 4, when it is determined that the rich media capability 1 is finally degraded to empty, the rich media capability 1 of the component 1 is canceled (for example, the URL link for jumping to the browser of the component 1 is deleted). In an implementation 5, when it is determined that the rich media capability 1 is finally degraded to empty, the component 1 is deleted, that is, all component parameters of the component 1 are deleted.

It may be understood that, in the implementation 4, in the degraded rich media card, the component 1 may continue to display the display content indicated by the component parameters of the component 1. However, in the implementation 5, the degraded rich media card does not include the component 1, and naturally, the display content indicated by the component parameters of the component 1 cannot be displayed.

In this embodiment of this application, adaptive degradation is performed on a component based on the rich media capability set 1 and a capability required by each component (for example, the component 1) in the original rich media card. In an implementation, the first rich media capability card in the range of the rich media capability set 1 is generated based on component parameters of each degraded component and a rich media card template 1 that is selected by the service device. In an implementation, a rich media card template 2 suitable for each degraded component is reselected based on the component parameters of each degraded component; and the first rich media capability card in the range of the rich media capability set 1 is generated based on the component parameters of each degraded component and the rich media card template 2. For example, after adaptive degradation, some components in the original rich media card are deleted. To improve the visual effect and user experience, a new rich media card template is required to re-lay out the degraded components.

S104: The card server 500 sends the first label of the first rich media card to the service device, and the service device receives the first label sent by the card server 500.

S105: The service device sends a rich media short message service message including the first label to the terminal device 100, and the terminal device 100 receives the rich media short message service message sent by the service device.

In some embodiments, the service device delivers the rich media short message service message including the first label to the terminal device 100 by using a conventional short message service message platform.

S106: The terminal device 100 sends an obtaining request to the card server 500, where the obtaining request includes the first label; and the card server 500 receives the obtaining request sent by the terminal device 100.

In this embodiment of this application, when receiving the rich media short message service message including the first label, the terminal device 100 sends the obtaining request to the card server 500; or when receiving an input operation of viewing the first rich media card corresponding to the rich media short message service message, the terminal device 100 sends the obtaining request to the card server 500. This is not specifically limited herein.

For example, with reference to FIG. 1B and FIG. 2B(a) and FIG. 2B(b), the input operation of viewing the rich media card corresponding to the rich media short message service message may be an input operation (for example, a touch operation) performed on the short message service message item 202, and in response to the input operation, the rich media card shown in FIG. 2B(a) or FIG. 2B(b) is displayed. With reference to FIG. 1C and FIG. 2B(a) and FIG. 2B(b), the input operation of viewing the rich media card corresponding to the rich media short message service message may be an input operation (for example, a touch operation) performed on the control 301 for displaying the card. In response to the input operation, the rich media card shown in FIG. 2B(a) or FIG. 2B(b) is displayed.

S107: The card server 500 sends the first rich media card corresponding to the first label to the terminal device 100, and the terminal device 100 receives the first rich media card sent by the card server 500.

S108: The terminal device 100 displays the first rich media card in the short message service message APP.

Specifically, the card server 500 sends card data of the first rich media card to the terminal device 100. The card data may include a card ID, card layout information, a card theme, and a theme color of the first rich media card, and component parameters of each component in the first rich media card. The card layout information may be specific card layout data of the first rich media card. The card layout information may alternatively be a download address (for example, a URL link) of the card layout data of the first rich media card, and the terminal device 100 may download the card layout data of the first rich media card by using the download address. The short message service message APP of the terminal device 100 invokes, by using the rendering module 1, the CPU and/or the GPU to draw and render the first rich media card based on the card layout and the component parameters of each component; and the short message service message APP displays a rendered first rich media card.

For example, the first rich media card is the rich media card shown in FIG. 2B(b).

The card data of the rich media card includes component parameters of a component A, for example, ""text1":{"textValue":"[Diving Dream Team Wins Another Gold]"}". "text1" is a component name of the component A, and a value "Diving Dream Team Wins Another Gold" of "textValue" is display content of the component A.

The card data of the rich media card includes component parameters of the component B, for example, ""text2":{"visibility":"visible","textValue":"."}", where "text2" is a component name of the component B, a value "visible" of "visibility" means that the component B is visible, a value "invisible" of "visibility" means that the component B is hidden (that is, invisible), and a value "." of "textValue" is display content of the component B. It should be noted that when the value of "visibility" is "visible", the rich media card shown in FIG. 2B(b) displays "Diving Dream Team Wins Another Gold."

The card data of the rich media card includes component parameters of a component C, for example, ""imgBottom": {"src":"https:VVa2p-functionxxxx.png", "visibility": "visible", "actionParams": "eyJkYXRhIjp7Im1lcxxxxxxxxxxxxxxx xxxxxxxxxx0sInR5cGUiOjJ9"}", where "imgBottom" is a component name of the component C, a value "https:Wa2p-functionxxxx.png" of "src" is a download address of display content (that is, a picture) of the component C, a value of "visibility" indicates whether the component C is visible, and a value "eyJkYXRhIjp7Im1lcxxxxxxxxxxxxxxxxxxxxxxxxx0sInR5cGUiOjJ9" of "actionParams" is code of a response event corresponding to the component C. The terminal device 100 decodes the value of "actionParams" to obtain the response event corresponding to the component C. In an example, after the value of "actionParams" is decoded, a URL link for implementing a specified interaction capability may be included.

In some embodiments, the terminal device 100 receives the input operation of viewing the first rich media card corresponding to the rich media short message service message; and in response to the input operation, the terminal device 100 displays the first rich media card in the short message service message APP.

In addition, in some embodiments, step S103 to step S108 are optional. After step S102, when determining that the rich media capability required by each component in the original rich media card does not meet a preset condition, the card server 500 performs step S103 to step S108; or when determining that the foregoing preset condition is met, the card server 500 performs step S109 to step S111.

In an implementation, the preset condition includes: It is determined, based on the rich media capability set 1, that rich media capabilities required by the components in the original rich media card are all adaptively degraded to empty; or it is determined that only a text component is left after adaptive degradation; or it is determined that rich media capabilities required by at least one component in the original rich media card are all adaptively degraded to empty.

S109: The card server 500 sends indication information 3 to the service device, where the indication information 3 indicates that a rich media card cannot be generated; and the service device receives the indication information 3 sent by the card server 500.

S110: The service device sends a text short message service message to the terminal device 100 based on the indication information 3, and the terminal device 100 receives the text short message service message sent by the service device.

S111: The terminal device 100 displays the text short message service message in the short message service message APP.

In this embodiment of this application, when determining that the rich media capability set of the terminal device 100 is insufficient to generate a required rich media card, the service device may not deliver a rich media short message service message to the terminal device 100, but deliver only a common text short message service message. In this way, poor user experience caused because the user cannot view the rich media card corresponding to the rich media short message service message can be avoided, and a waste of rich media short message service message fees can also be avoided.

**The following describes, by using examples with reference to the accompanying drawings, application of the rich media information processing method provided in embodiments of this application.**

For example, the rich media capability 1 of the component 1 in the original rich media card of the service device is the video rendering capability. FIG. 2B(a) and FIG. 2B(b) show a related user interface in which the video rendering capability is degraded to the static picture rendering capability. For details, refer to the foregoing embodiment. Details are not described herein again.

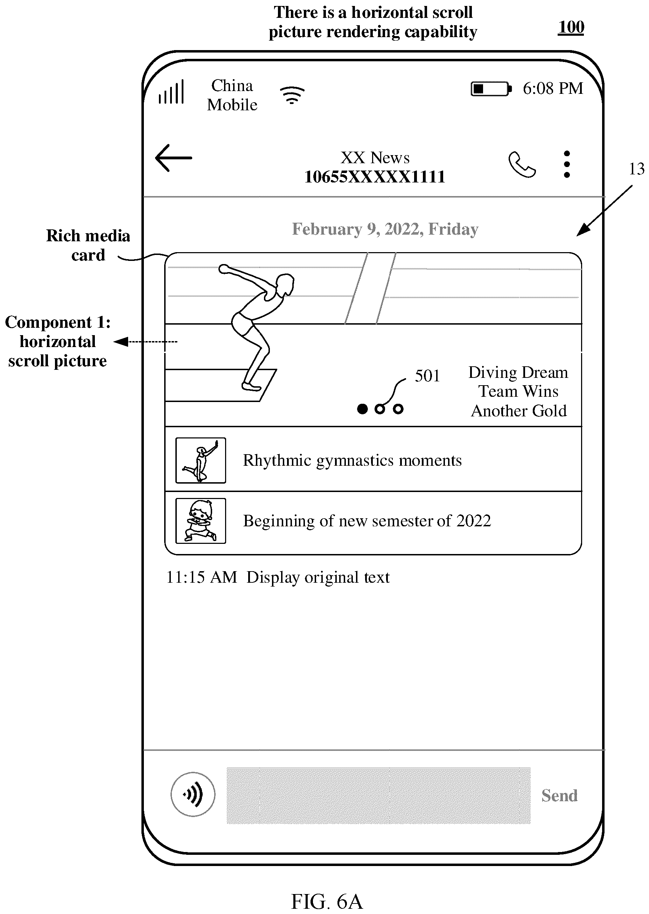

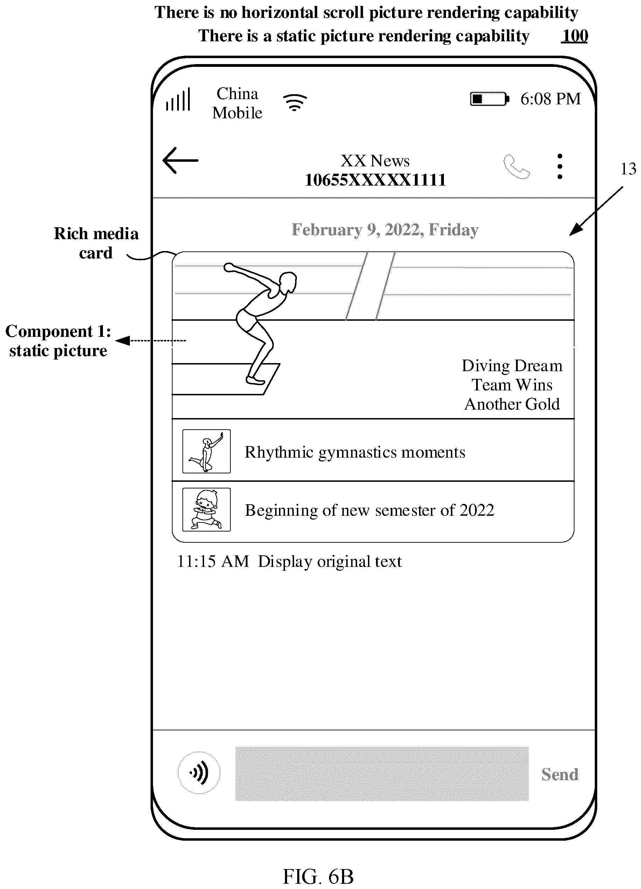

For example, the rich media capability 1 of the component 1 in the original rich media card of the service device is the horizontal scroll picture rendering capability. FIG. 6A and FIG. 6B show related user interfaces in which the horizontal scroll picture rendering capability is degraded to the static picture rendering capability. The user taps the short message service message item 202 of XX News shown in FIG. 1B, and in response to the tap operation of the user, the terminal device 100 may display, in the short message service message APP, the rich media card shown in FIG. 6A or FIG. 6B.

When the short message service message APP of the terminal device 100 has the horizontal scroll picture rendering capability, the card server 500 may generate and deliver the rich media card shown in FIG. 6A. Display content of the component 1 shown in FIG. 6A includes a plurality of pictures, and a display region of the component 1 further includes a picture indicator 501. The picture indicator 501 may indicate a picture that is currently viewed by the user in the plurality of pictures.

When the short message service message APP of the terminal device 100 does not have the horizontal scroll picture rendering capability, but has the static picture rendering capability, the card server 500 may generate and deliver the rich media card shown in FIG. 6B. As shown in FIG. 6B, the component 1 is degraded from a horizontal scroll picture to a static picture.

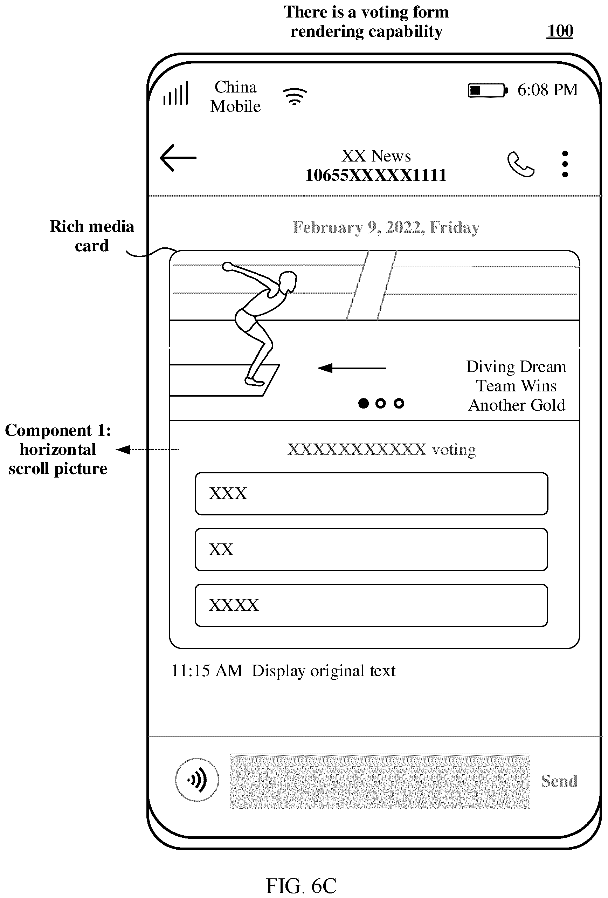

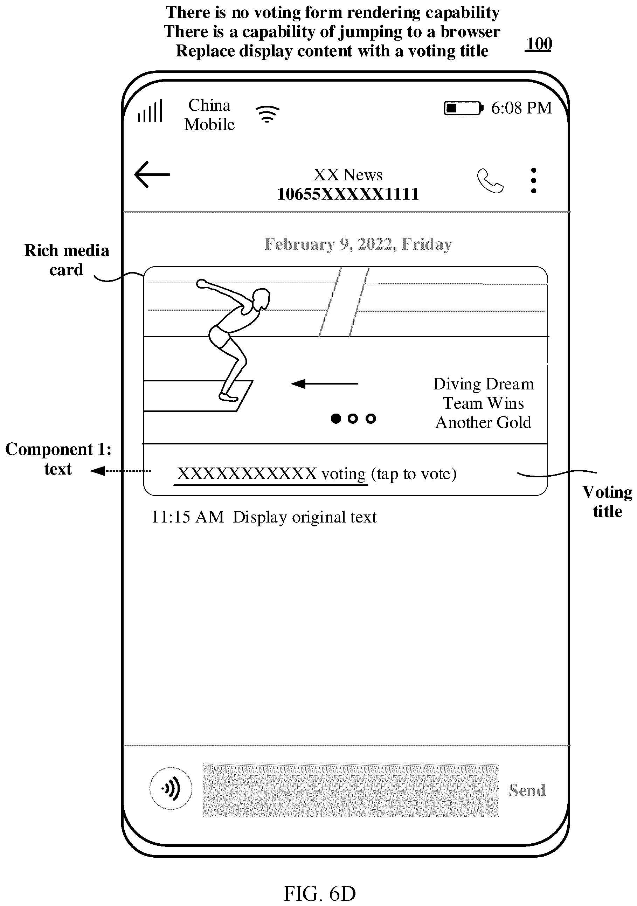

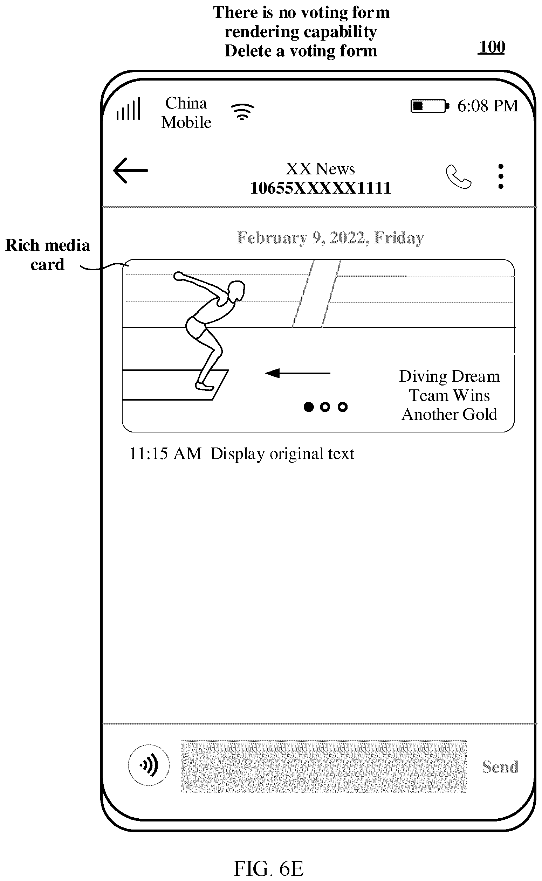

For example, the rich media capability 1 of the component 1 in the original rich media card of the service device is the voting form rendering capability. FIG. 6C to FIG. 6E show related user interfaces in which the voting form rendering capability is degraded. The user taps the short message service message item 202 of XX News shown in FIG. 1B, and in response to the tap operation of the user, the terminal device 100 may display, in the short message service message APP, the rich media card shown in FIG. 6C, FIG. 6D, or FIG. 6E.

When the short message service message APP of the terminal device 100 has the voting form rendering capability, the card server 500 may generate and deliver the rich media card shown in FIG. 6C. Display content of the component 1 shown in FIG. 6C includes a voting title and a plurality of voting options, and the user may select at least one of the plurality of voting options to vote.

When the short message service message APP of the terminal device 100 does not have the voting form rendering capability, the component 1 is associated with a jump link (for example, the URL connection 1 of the voting web page), and the short message service message APP has the capability of jumping to the browser, the card server 500 may generate and deliver the rich media card shown in FIG. 6D. Display content of the component 1 shown in FIG. 6D includes a voting title. The voting title may receive an input operation of the user, and in response to the input operation of the user, jump to the voting web page of the browser based on the URL connection 1, and the user may vote through the voting web page. Optionally, if the card parameters of the original rich media card that are submitted by the service device indicate that the component 1 is associated with the URL connection 1, when the short message service message APP of the terminal device 100 has the voting form rendering capability, the card server 500 may delete the URL connection 1 of the component 1 when generating the rich media card shown in FIG. 6C. It may be understood that, when the short message service message APP has the voting form rendering capability, there is no need to jump to the voting web page to vote.

When the short message service message APP of the terminal device 100 does not have the voting form rendering capability, and the component 1 is not associated with a jump link (or when the component 1 is associated with a jump link, but the short message service message APP does not have the capability of jumping to the browser), the card server 500 may generate and deliver the rich media card shown in FIG. 6E. As shown in FIG. 6E, the card server 500 deletes the component 1.

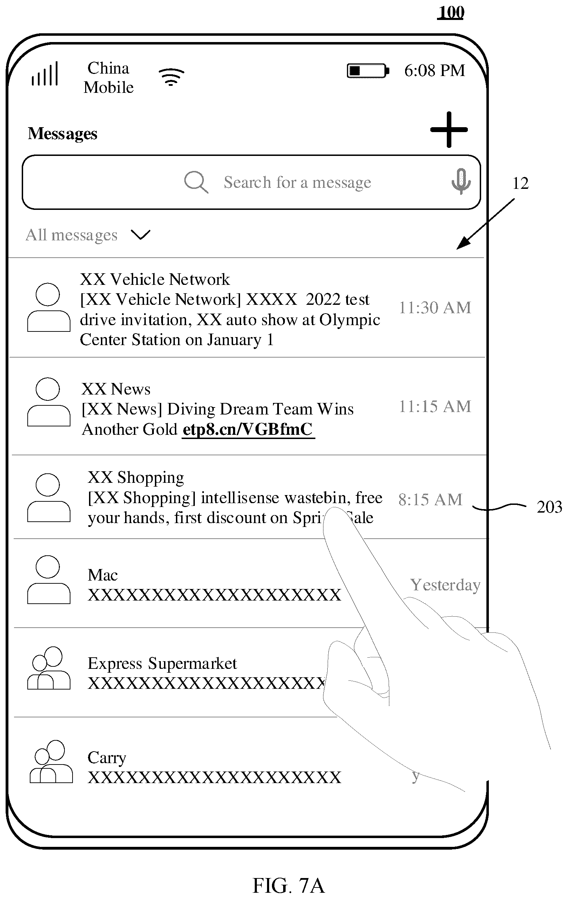

For example, the rich media capability 1 of the component 1 in the original rich media card of the service device is the capability of jumping to the shopping APP, the jump link of the component 1 includes the URL link 1 for jumping to the shopping APP and the URL link 2 for jumping to a shopping web page of the browser, and a jump link preferentially used by the component 1 is the URL link 1. FIG. 7A to FIG. 7F show related user interfaces in which the capability of jumping to the shopping APP is degraded to the capability of jumping to the browser.

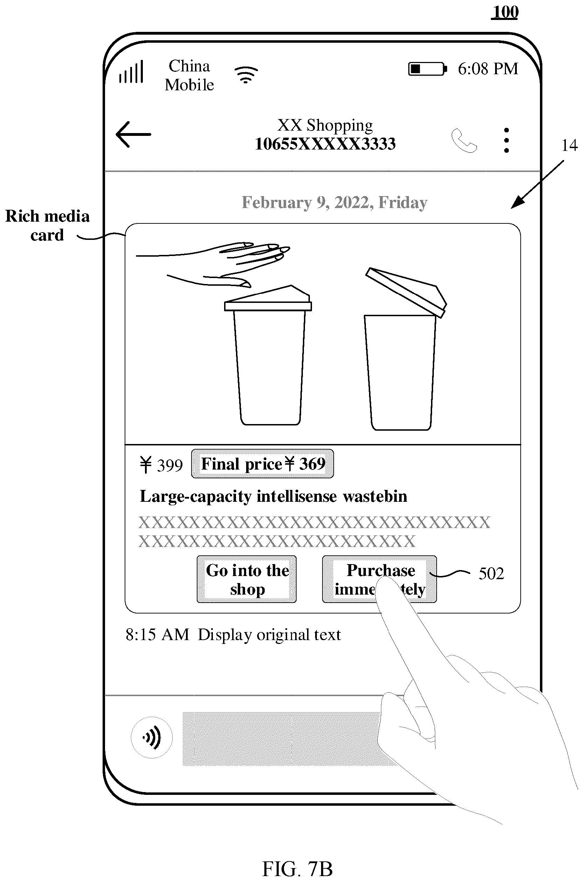

The user taps the short message service message item 203 of XX Shopping shown in FIG. 7A. In response to the tap operation of the user, the terminal device 100 may display, in a short message service message display interface 14, the rich media card delivered by the card server 500 shown in FIG. 7B. The rich media card includes the component 1 (for example, a purchase button 502).

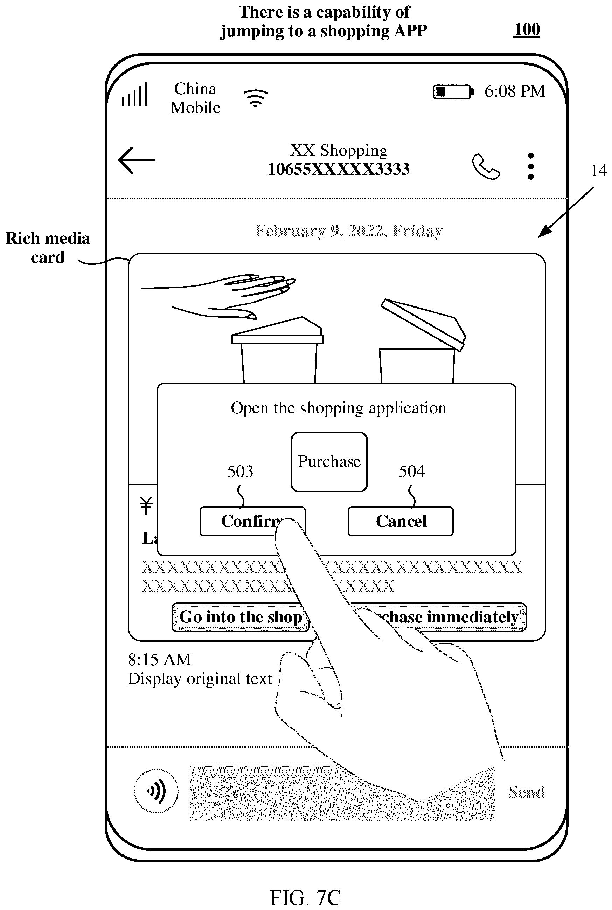

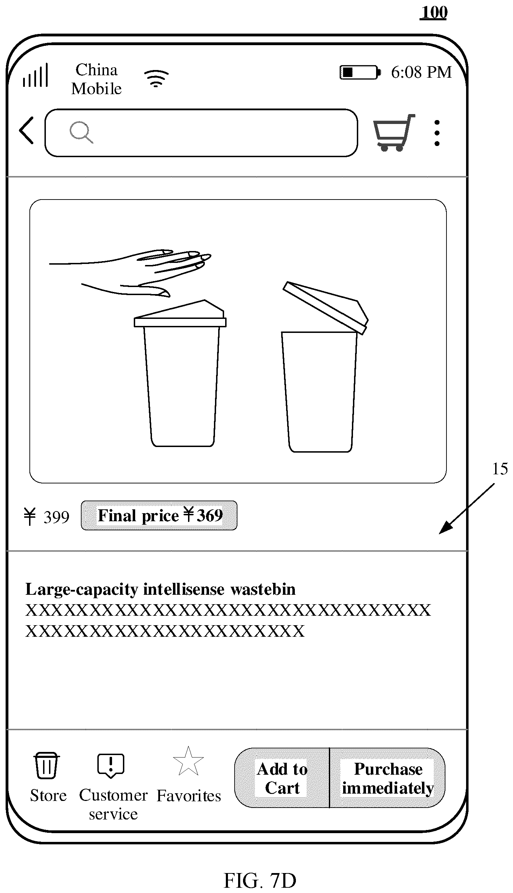

When the short message service message APP of the terminal device 100 has the capability of jumping to the shopping APP, in the rich media card generated and delivered by the card server 500, a jump link associated with the button 502 is the URL link 1. In response to an input operation (for example, a touch operation) on the purchase button 502, the terminal device 100 may display a confirm button 503 and a cancel button 504 shown in FIG. 7C. The confirm button 503 is used to confirm to open the shopping APP, and the cancel button 504 is used to cancel opening the shopping APP. The confirm button 503 may receive an input operation (for example, a touch operation) of the user. In response to the input operation, the terminal device 100 obtains and displays, based on the URL link 1, a shopping interface 15 of the shopping APP shown in FIG. 7D. Optionally, in response to the input operation on the purchase button 502, the terminal device 100 may alternatively directly display the shopping interface 15 shown in FIG. 7D.

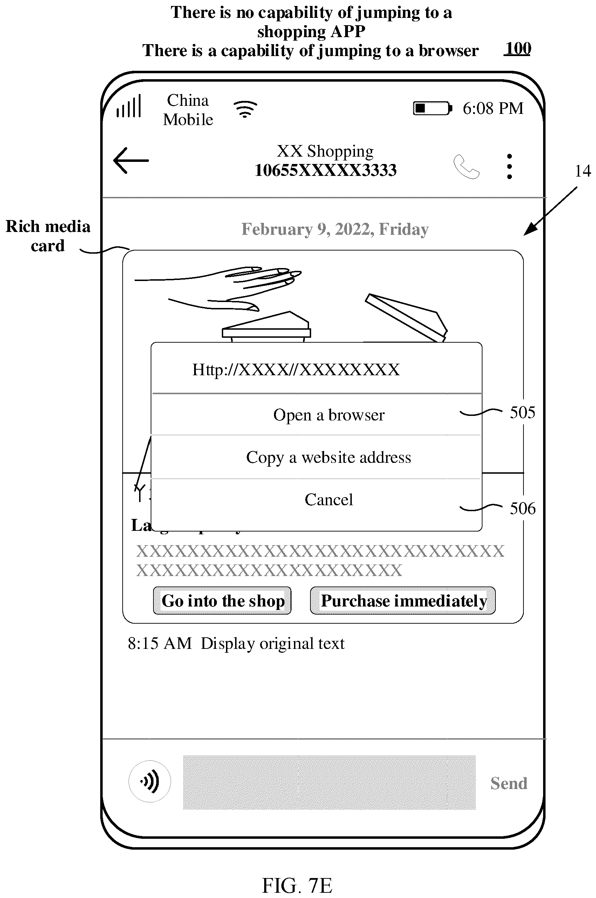

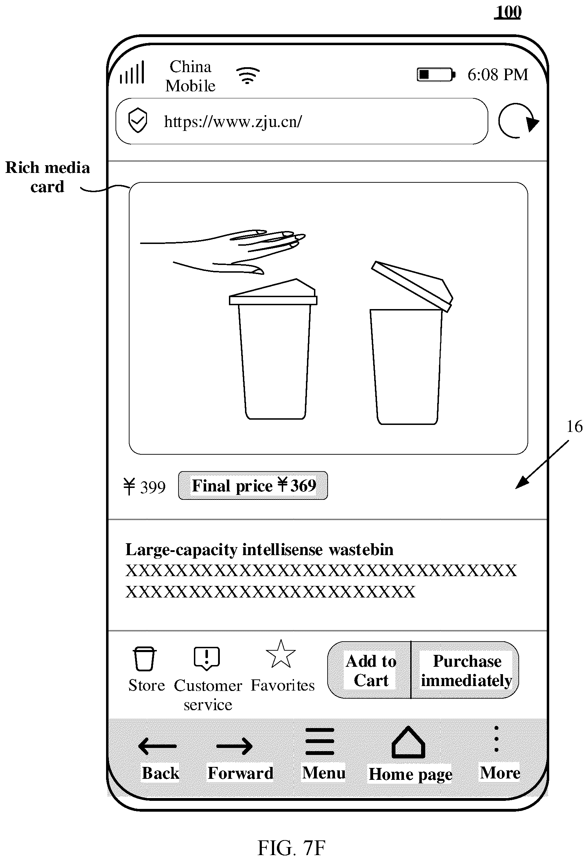

When the short message service message APP of the terminal device 100 does not have the capability of jumping to the shopping APP, but has the capability of jumping to the browser, in the rich media card generated and delivered by the card server 500, a jump link associated with the button 502 is the URL link 2. In response to an input operation (for example, a touch operation) on the purchase button 502, the terminal device 100 may display a confirm button 505 and a cancel button 506 shown in FIG. 7E. The confirm button 505 is used to confirm to open the browser, and the cancel button 506 is used to cancel opening the browser. The confirm button 505 may receive an input operation (for example, a touch operation) of the user. In response to the input operation, the terminal device 100 obtains and displays, based on the URL link 2, a shopping web page 16 of the browser shown in FIG. 7F. Optionally, in response to the input operation on the purchase button 502, the terminal device 100 may alternatively directly display the shopping web page 16 shown in FIG. 7F. It may be understood that the capability that is of the purchase button 502 and that is of jumping to the shopping APP is degraded to the capability of jumping to the browser.

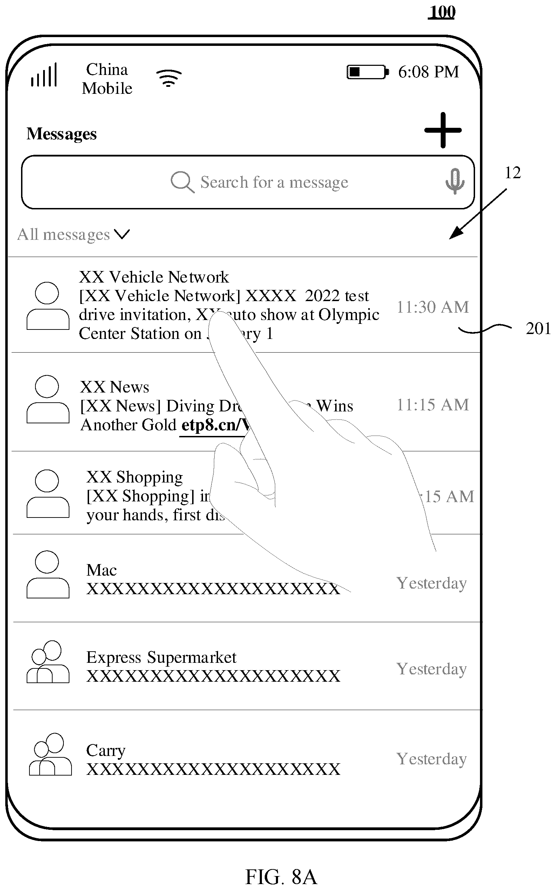

For example, the rich media capability 1 of the component 1 in the original rich media card of the service device is the capability of jumping to the map APP for positioning and navigation, the capability of jumping to another page of the short message service message APP to reply to a short message service message, or the capability of jumping to the phone APP for callback. FIG. 8A to FIG. 8F show related user interfaces in which the rich media capability 1 of the component 1 is degraded to empty.

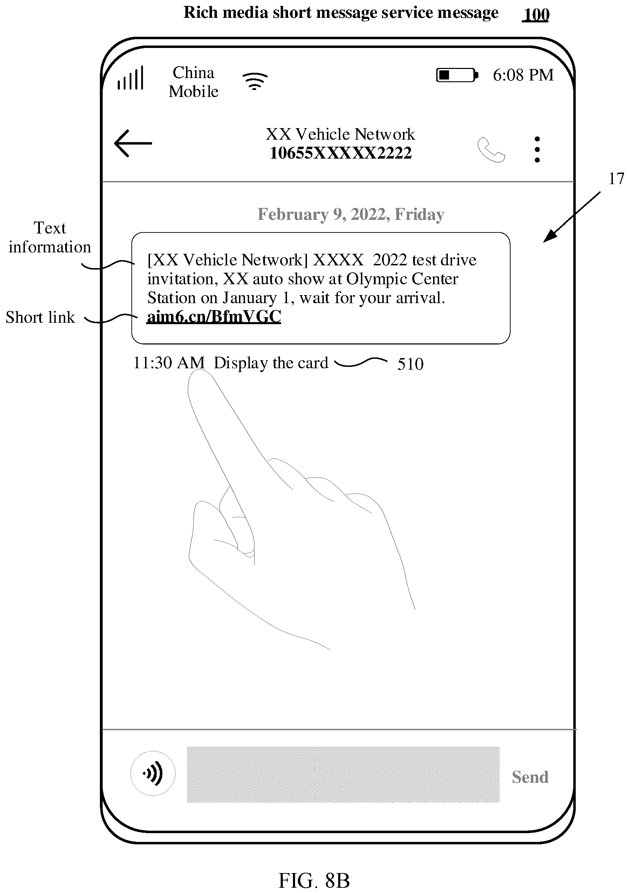

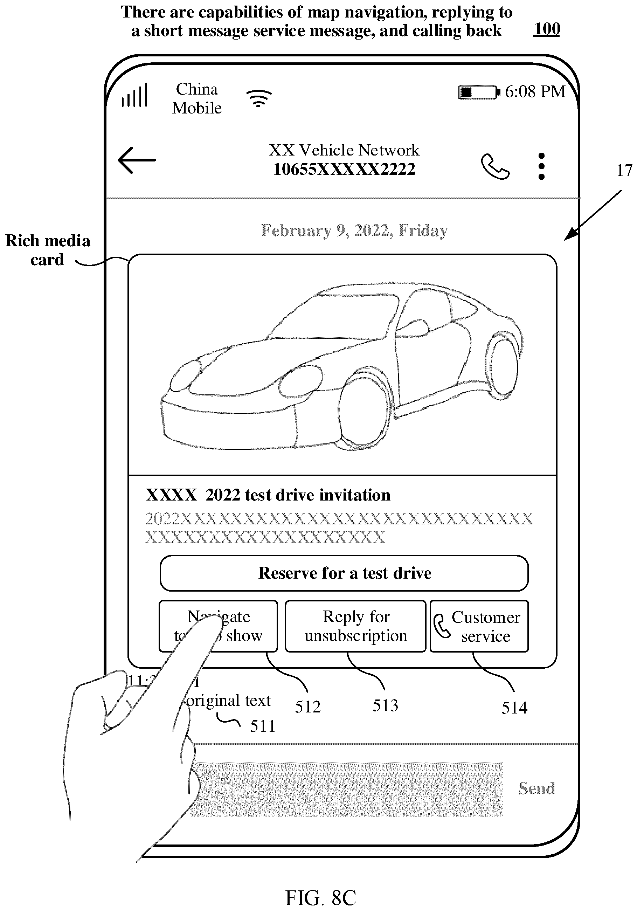

When the terminal device 100 has all rich media capabilities required by the original rich media card, in response to a tap operation performed by the user on the short message service message item 201 of XX Vehicle Network shown in FIG. 8A, the terminal device 100 may display a short message service message display interface 17 shown in FIG. 8B or FIG. 8C. The short message service message display interface 17 shown in FIG. 8B includes text information of a rich media short message service message and a control 510, and the text information includes a short link corresponding to a rich media card. The control 510 may receive an input operation of the user, and in response to the input operation, the terminal device 100 may display the short message service message display interface 17 shown in FIG. 8C. As shown in FIG. 8C, the short message service message display interface 17 includes the rich media card that corresponds to the short link and that is delivered by the card server 500, and further includes a control 511. The control 511 is used to switch the rich media card shown in FIG. 8C to the text information shown in FIG. 8B.

As shown in FIG. 8C, the terminal device 100 has the capability of jumping to the map APP for positioning and navigation, the capability of jumping to another page of the short message service message to reply to a short message service message, and the capability of jumping to the phone APP for callback. The rich media card generated and delivered by a card server 500 includes a navigation button 512, a button 513 for replying to a short message service message, and a button 514 for dial.

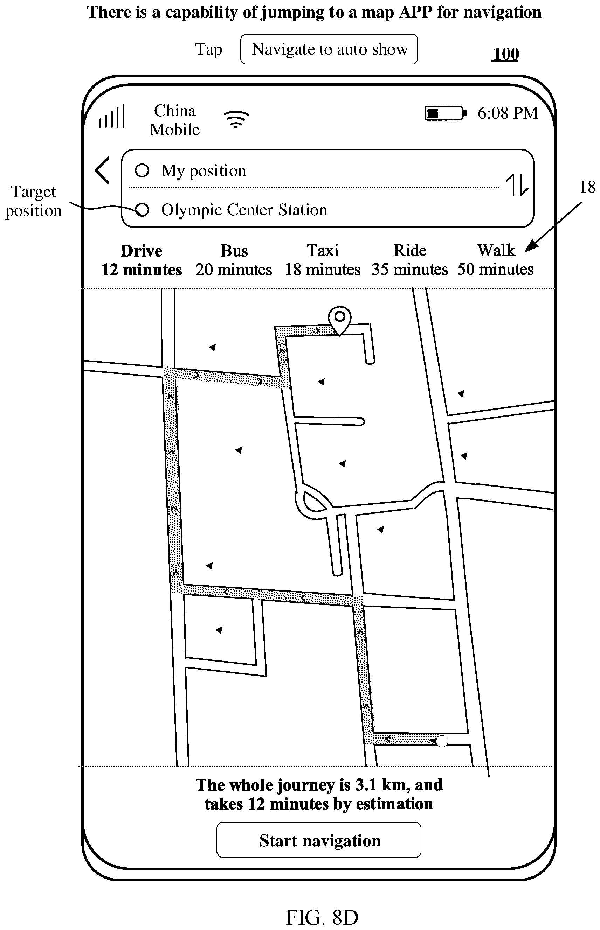

The navigation button 512 may receive an input operation (for example, a tap operation) of the user. In response to the tap operation, the terminal device 100 may display a map APP navigation interface 18 shown in FIG. 8D. Component parameters of the navigation button 512 further include a target position. The navigation interface 18 may include a navigation route that uses a current position of the user as a starting point and uses a target position indicated by the component parameters as an ending point.

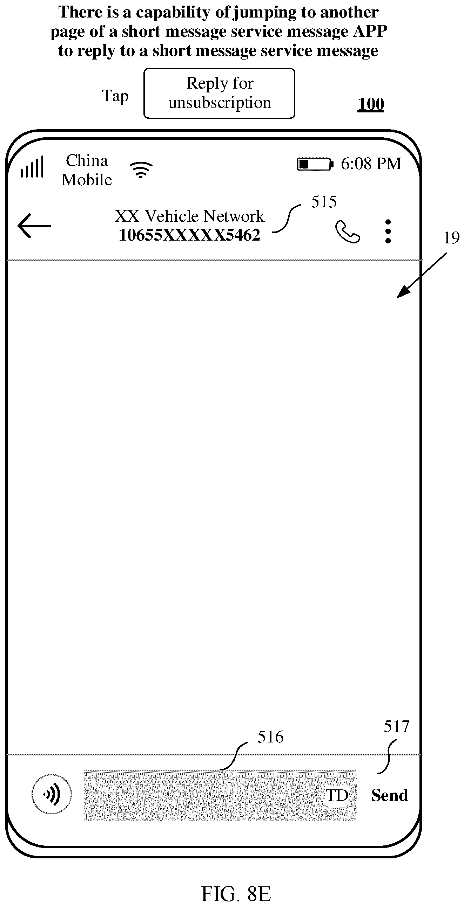

The button 513 for replying to a short message service message may receive an input operation (for example, a tap operation) of the user. In response to the tap operation, the terminal device 100 may display a short message service message display interface 19 of a number 515 shown in FIG. 8E. Component parameters of the button 513 may include the number 515 and information that is used for unsubscription (for example, TD). The short message service message display interface 19 includes an information input box 516 and a send button 517. The information for unsubscription has been automatically filled in the information input box 516, and the user only needs to tap the send button 517 to complete short message service message unsubscription.

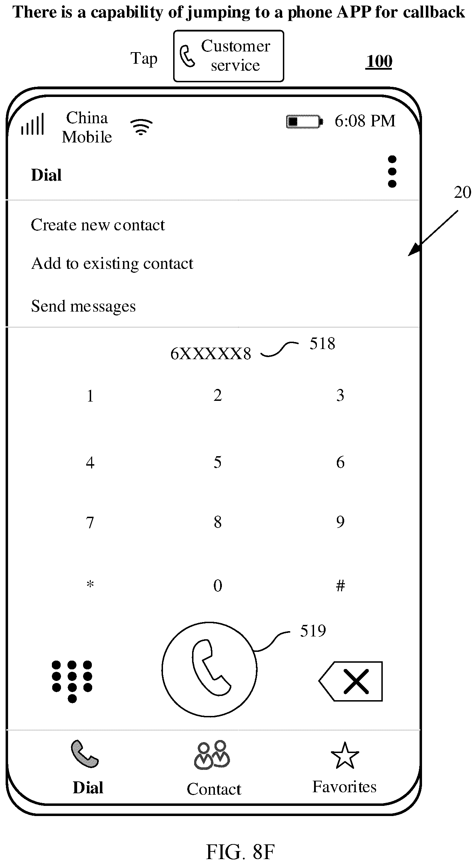

The button 514 for dial may receive an input operation (for example, a tap operation) of the user. In response to the tap operation, the terminal device 100 may display, in the phone APP, a dial interface 20 shown in FIG. 8F. Component parameters of the button 514 may include a number 518. A short message service message display interface 18 includes a dial input box 518 and a dial button 519. The number 518 has been automatically filled in the information input box 518, and the user only needs to tap the dial button 519, to dial the number 518.

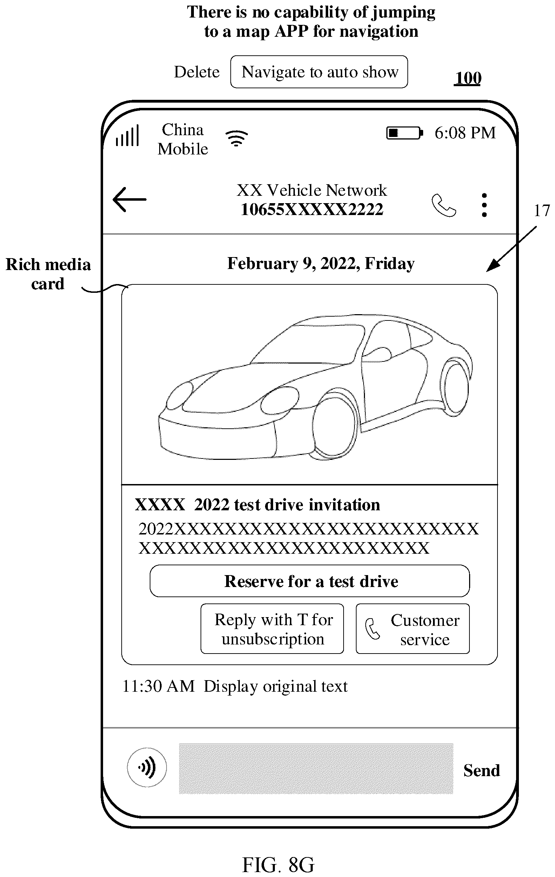

When the short message service message APP of the terminal device 100 does not have the capability that is required by the navigation button 512 and that is of jumping to the map APP for positioning and navigation, and has another capability required by the original rich media card, it is determined, based on the capability degradation relationship, that the capability of jumping to the map APP for positioning and navigation is degraded to empty, and the card server 500 deletes the navigation button 512, and generates and delivers the rich media card shown in FIG. 8G. In other words, in response to the tap operation performed by the user on the short message service message item 201 of XX Vehicle Network shown in FIG. 8A, the terminal device 100 may display the rich media card shown in FIG. 8G.

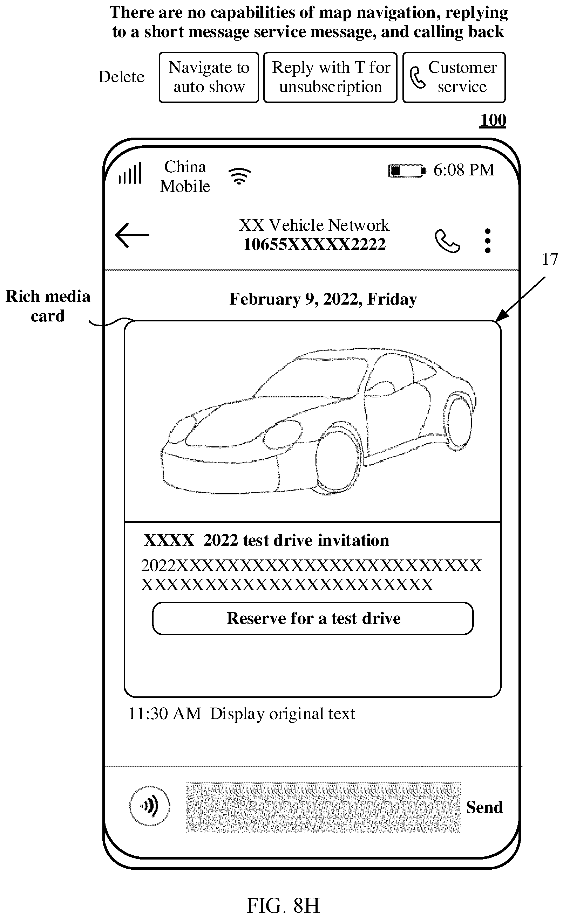

When the short message service message APP of the terminal device 100 does not have the capability that is required by the navigation button 512 and that is of jumping to the map APP for positioning and navigation, the capability that is required by the button 513 and that is of jumping to another page of the short message service message to reply to a short message service message, and the capability that is required by the button 514 and that is of jumping to the phone APP for dial, and has another capability required by the original rich media card, it is determined, based on the capability degradation relationship, that the three capabilities are all degraded to empty, and the card server 500 deletes the navigation button 512, the button 513, and the button 514, and generate and deliver the rich media card shown in FIG. 8H. In other words, in response to the tap operation performed by the user on the short message service message item 201 of XX Vehicle Network shown in FIG. 8A, the terminal device 100 may display the rich media card shown in FIG. 8H.

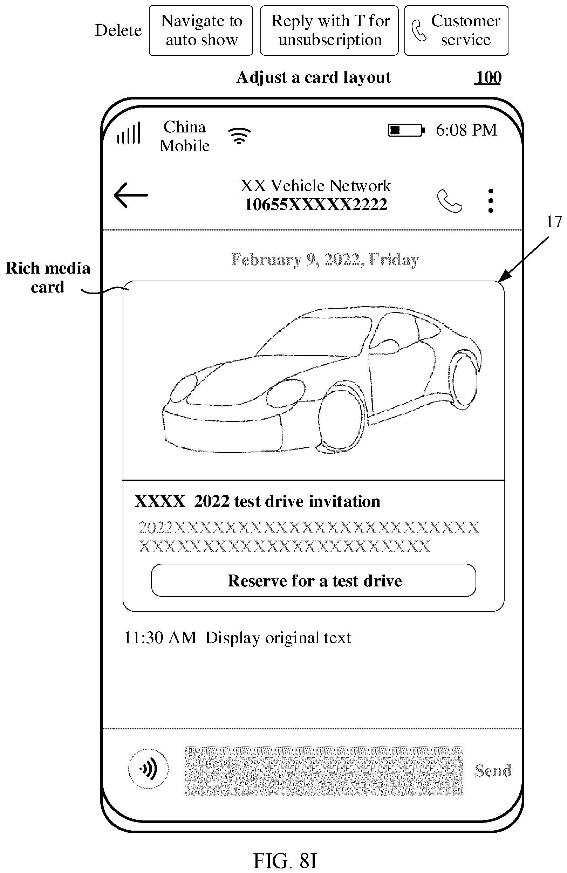

In an implementation, when deleting some components in the original rich media card, the card server 500 adaptively adjusts a layout of remaining components. For example, the card server 500 deletes the navigation button 512, the button 513, and the button 514, and generates and delivers the rich media card shown in FIG. 8I. Compared with the original rich media card shown in FIG. 8C, a card size of the rich media card shown in FIG. 8I is reduced.

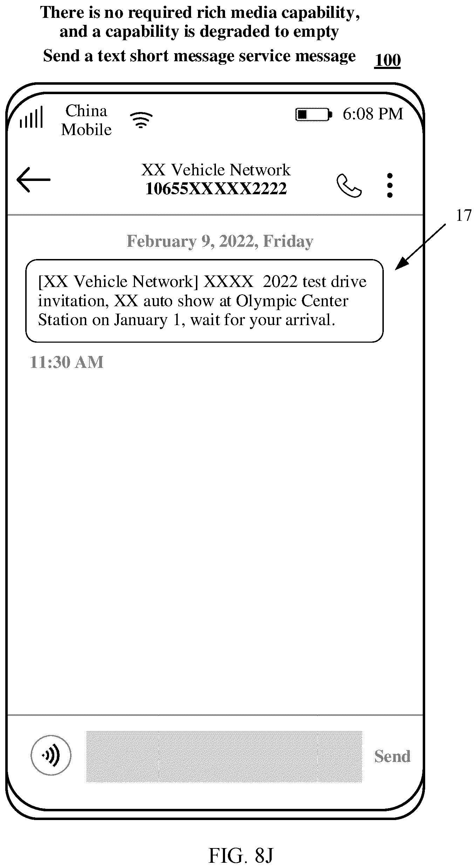

For example, when it is determined, based on the rich media capability set 1 of the terminal device 100 and the card parameters of the original rich media card, that rich media capabilities required by the components in the original rich media card are all adaptively degraded to empty, or only a component rendering capability of a text component is left after adaptive degradation, the card server 500 feeds back indication information 3 to the service device, where the indication information 3 indicates that a rich media card in the range of the rich media capability set 1 cannot be generated. Based on the indication information 3, the service device may not deliver a rich media short message service message to the terminal device 100, but deliver a text short message service message shown in FIG. 8J.

This application provides a rich media information processing system, including a first terminal device, a service device, and a card server 500, where
the first terminal device is configured to send first information to the card server 500, where the first information indicates a first rich media capability set supported by a first application of the first terminal device, and the first rich media capability set includes at least one rich media capability;
the service device is configured to send card parameters of an original rich media card and a device identifier of the first terminal device to the card server 500;
the card server 500 is further configured to: generate first card information based on the card parameters and the first rich media capability set, where the first card information includes card data of a first rich media card and a corresponding first label, and send the first label to the service device;
the service device is further configured to send a rich media message to the first application of the first terminal device, where the rich media message includes the first label;
the first application of the first terminal device is further configured to send an obtaining request to the card server 500, where the obtaining request includes the first label;
the card server 500 is further configured to send the card data to the first application of the first terminal device; and
the first application of the first terminal device is further configured to display the first rich media card based on the card data.

For example, the first terminal device may be the foregoing terminal device 100, the first application may be the foregoing short message service message APP, the first information may be the foregoing indication information 1, the first rich media capability set may be the foregoing rich media capability set 1, the device identifier of the first terminal device may be the device identifier 1 of the foregoing terminal device 100, and the rich media message may be the foregoing rich media short message service message.

In some embodiments, rich media capabilities include a component rendering capability and an interaction capability; the component rendering capability is a capability of rendering a specified component in a rich media card, where the specified component includes one or more of the following: a static picture, a dynamic picture, a video, a horizontal scroll picture, a carousel picture, a voting form, a button, and the like; and the interaction capability includes one or more of the following: jumping to a browser, jumping to a preset application (APP), jumping to a phone APP for dial, jumping to a map APP for positioning and navigation, jumping to another APP to share a rich media card, jumping to a quick application, and the like, where the preset APP is an APP having a web page version.

In some embodiments, the card data includes card layout information of the original rich media card and component parameters of each component in the original rich media card, and the component parameters include some or all of a component name, information indicating display content of a component, a URL link for implementing a specified interaction capability of the component, a component type, and the like.

In some embodiments, the first information includes an identifier of each rich media capability in the first rich media set; or the first information includes a version number of the first rich media set, the card server 500 stores version numbers of a plurality of rich media capability sets, and the plurality of rich media capability sets include the first rich media set.

In some embodiments, generating the first card information based on the card parameters and the first rich media capability set range specifically includes: determining, based on the card parameters, at least one rich media capability required by each component in the original rich media card, where a rich media capability required by a first component includes a first rich media capability, and the first component is any component in the original rich media card; and when the first rich media capability set does not include the first rich media capability, performing capability degradation on the first component based on a preset capability degradation relationship; and after capability degradation, generating the first card information of the first rich media card within a rich media capability range of the first application.

For example, the first component may be the foregoing component 1.

In some embodiments, the card parameters include a component type of the first component, and the rich media capability required by the first component includes a component rendering capability corresponding to the component type of the first component; and when the card parameters include a URL connection that is used for implementing a specified interaction capability and that is of the first component, the rich media capability required by the first component includes the specified interaction capability.

In some embodiments, the capability degradation relationship includes one or more of the following: the first rich media capability is degraded to a second rich media capability, or the first rich media capability is degraded to empty; or the second rich media capability is degraded to a third rich media capability, or the second rich media capability is degraded to empty, where degrading to empty means that degrading to another rich media capability is not allowed.

For example, Table 3 shows some capability degradation relationships provided in this embodiment of this application. The capability degradation relationship includes a capability degradation relationship of a component rendering capability and a capability degradation relationship of an interaction capability, where the capability degradation relationship of the component rendering capability includes one or more of the following: a dynamic picture rendering capability is degraded to a static picture rendering capability, a horizontal scroll picture rendering capability is degraded to the static picture rendering capability, a video rendering capability is degraded to the static picture rendering capability, a carousel picture rendering capability is degraded to the horizontal scroll picture rendering capability, the static picture rendering capability is degraded to empty, and a voting form rendering capability is degraded to empty; and the capability degradation relationship of the interaction capability includes one or more of the following: a capability of jumping to a preset APP is degraded to a capability of jumping to a browser; the capability of jumping to the browser is degraded to empty; a capability of jumping to a phone APP for dial is degraded to empty; a capability of jumping to a map APP for positioning and navigation is degraded to empty; a capability of jumping to another page of the first application to reply to information is degraded to empty; and a capability of jumping to another APP to share a rich media card is degraded to empty.

In some embodiments, the first rich media capability set does not include the first rich media capability, but includes the second rich media capability, the second rich media capability is a capability obtained after the first rich media capability is degraded, and the first rich media capability and the second rich media capability are component rendering capabilities; the card parameters include information indicating first display content of the first component, where the first display content is presented by using the first rich media capability; and the first rich media card includes a second component, display content of the second component is second display content, the second display content is determined based on the first display content, and the second display content is presented by using the second rich media capability.

In some embodiments, the first rich media capability is the video rendering capability, and the second rich media capability is the static picture rendering capability; and the first display content is a video, and the second display content is one frame of a static image in the video. For example, the first display content is the video 1 in the rich media card shown in FIG. 2B(a), and the first component is a video component corresponding to the video 1; and the first rich media card is the rich media card shown in FIG. 2B(b), the second display content is the static picture 1 in the rich media card, and the second component is a static picture component corresponding to the static picture 1.

In some embodiments, the first rich media capability set includes the third rich media capability, but does not include the first rich media capability and the second rich media capability, the third rich media capability is a capability obtained after the second rich media capability is degraded, and the first rich media capability, the second rich media capability, and the third rich media capability are component rendering capabilities; the card parameters include information indicating first display content of the first component, where the first display content is presented by using the first rich media capability; and the first rich media card includes a third component, display content of the third component is third display content, the third display content is determined based on the first display content, and the third display content is presented by using the third rich media capability.

For example, the first component is a carousel picture component, the first rich media capability is a carousel picture rendering capability, the second rich media capability is a horizontal scroll picture rendering capability, and the third rich media capability is a static picture rendering capability.

In some embodiments, the first rich media capability set does not include the first rich media capability, the first rich media capability cannot be degraded to another rich media capability, and the first rich media capability is the component rendering capability; the card parameters include information indicating first display content of the first component, and the first display content is presented by using the first rich media capability; and the first rich media card does not display the first display content.

For example, the first component is a voting form component, and the first rich media capability is a voting form rendering capability. With reference to FIG. 6C, the original rich media card may be the rich media card shown in FIG. 6C, and the rich media card displays a voting form. The first rich media card may be the rich media card shown in FIG. 6D or FIG. 6E. As shown in FIG. 6D and FIG. 6E, when the short message service message APP does not have a voting form rendering capability, the rich media card does not display the voting form.

In some embodiments, the first rich media card includes a fourth component, display content of the fourth component is a first URL link or replacement content of the first component, and the card parameters include the first URL link that is used for implementing an interaction capability and that is of the first component and the replacement content of the first component.

For example, the fourth component is the component 1 shown in FIG. 6D, the card parameters include a URL link that is of the voting form component and that is for jumping to a voting web page, and the voting form in the original rich media card is replaced with a text (for example, the foregoing URL link).

In some embodiments, the card parameters include the first URL link that is used for implementing a fourth rich media capability and that is of the first component and a second URL link that is used for implementing a fifth rich media capability and that is of the first component, where the fifth rich media capability is a capability obtained after the fourth rich media capability is degraded, and the fourth rich media capability and the fifth rich media capability are interaction capabilities; and when the first rich media capability set includes the fourth rich media capability, the first rich media card includes the first component, and the first terminal device is further configured to: in response to a first input operation on the first component, jump, based on the fourth rich media capability, to a user interface indicated by the first URL link; or when the first rich media capability set does not include the fourth rich media capability, but includes the fifth rich media capability, the first rich media card includes a fifth component, and the first terminal device is further configured to: in response to a first input operation on the fifth component, jump, based on the fifth rich media capability, to a user interface indicated by the second URL link.

In some embodiments, the first URL link is a URL link of the preset APP, and the second URL link is a URL link of the web page version of the preset APP; and the fourth rich media capability is the capability of jumping to the preset APP, and the fifth rich media capability is the capability of jumping to the browser. For example, the preset APP is a shopping APP, the first rich media card may be the rich media card shown in FIG. 7B, FIG. 7C, or FIG. 7E, and the first component is the button 502. As shown in FIG. 7B to FIG. 7D, when the short message service message APP has a capability of jumping to the shopping APP, the first rich media card includes the button 502, and in response to a first input operation on the button 502, the short message service message APP may jump to a user interface of the shopping APP indicated by the first URL link. As shown in FIG. 7B, FIG. 7E, and FIG. 7F, when the short message service message APP does not have the capability of jumping to the shopping APP but has the capability of jumping to the browser, the first rich media card includes the button 502 (that is, the fifth component). In response to the first input operation on the button 502, the short message service message APP may jump to a web page version of the shopping APP indicated by the second URL link.

In some embodiments, the first rich media capability set does not include the fourth rich media capability, but includes the fifth rich media capability, the fifth rich media capability is a capability obtained after the fourth rich media capability is degraded, and the fourth rich media capability and the fifth rich media capability are interaction capabilities; the card parameters include the first URL link that is used for implementing the fourth rich media capability and that is of the first component, and the card parameters do not include a URL link that is used for implementing the fifth rich media capability and that is of the first component; and the first rich media card does not include a component having the fourth rich media capability. In an implementation, the first rich media card includes a sixth component, the sixth component is generated based on component parameters of the first component, and component parameters of the sixth component do not include the first URL link. In another implementation, the first rich media card does not include a component generated based on the component parameters of the first component, and the first component is deleted.

In some embodiments, the first rich media capability set does not include a fourth rich media capability, the fourth rich media capability cannot be degraded to another rich media capability, and the fourth rich media capability is the interaction capability; the card parameters include the first URL link that is used for implementing the fourth rich media capability and that is of the first component; and the first rich media card does not include a component having the fourth rich media capability. In an implementation, the first rich media card includes a sixth component, the sixth component is generated based on component parameters of the first component, and component parameters of the sixth component do not include the first URL link. In another implementation, the first rich media card does not include a component generated based on the component parameters of the first component, that is, the first component is deleted.

For example, the original rich media card is the rich media card shown in FIG. 8C, the first component is the button 512, and the fourth rich media capability is the capability of jumping to the map APP for positioning and navigation, and the capability cannot be degraded to another capability. The first rich media card is the rich media card shown in FIG. 8G, the short message service message APP does not have the capability of jumping to the map APP for positioning and navigation, and the rich media card does not display the button 512.

In some embodiments, sending the obtaining request to the card server 500 specifically includes: receiving a second input operation used to view the rich media card corresponding to the rich media message; and sending the obtaining request to the card server 500 in response to the second input operation.

In some embodiments, the system further includes a second terminal device. The second terminal device is configured to send second information to the card server 500, where the second information indicates a second rich media capability set supported by a first application of the second terminal device, and the second rich media capability set includes at least one rich media capability. The card server 500 is further configured to: generate third information based on the card parameters and the second rich media capability set, and send the third information to the service device, where the third information indicates that a rich media card of the second terminal device cannot be generated based on the card parameters. The service device is further configured to send a text message corresponding to the original rich media card to the first application of the second terminal device. The first application of the second terminal device is further configured to display the text message.

For example, the third information may be the foregoing indication information 3, and the text message may be the foregoing text short message service message.

In some embodiments, the second information is generated when the second card parameters and the second rich media capability set meet a preset condition. The preset condition includes: It is determined, based on the preset capability degradation relationship and the first rich media capability set, that all rich media capabilities required by the original rich media card are degraded to empty, or it is determined that at least one rich media capability required by the original rich media card is degraded to empty, where degrading to empty means that degrading to another rich media capability is not allowed.

The implementations of this application may be arbitrarily combined, to achieve different technical effects.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, procedures or functions according to this application are entirely or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, wireless, or microwaves) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

In conclusion, the foregoing is merely embodiments of the technical solution of the present invention, but is not intended to limit the protection scope of the present invention. Any modification, equivalent replacement, improvement, or the like made based on the disclosure of the present invention shall fall within the protection scope of the present invention.

## Claims

1. A rich media information processing system, wherein the system comprises a first terminal device, a service device, and a card server, wherein
the first terminal device is configured to send first information to the card server, wherein the first information indicates a first rich media capability set supported by a first application of the first terminal device, and the first rich media capability set comprises at least one rich media capability;
the service device is configured to send card parameters of an original rich media card and a device identifier of the first terminal device to the card server;
the card server is further configured to: generate first card information based on the card parameters and the first rich media capability set, wherein the first card information comprises card data of a first rich media card and a corresponding first label, and send the first label to the service device;
the service device is further configured to send a rich media message to the first application of the first terminal device, wherein the rich media message comprises the first label;
the first application of the first terminal device is further configured to send an obtaining request to the card server, wherein the obtaining request comprises the first label;
the card server is further configured to send the card data to the first application of the first terminal device; and
the first application of the first terminal device is further configured to display the first rich media card based on the card data.

2. The system according to claim 1, wherein rich media capabilities comprise a component rendering capability and an interaction capability;
the component rendering capability is a capability of rendering a specified component in a rich media card, wherein the specified component comprises one or more of the following: a static picture, a dynamic picture, a video, a horizontal scroll picture, a carousel picture, a voting form, a button, and the like; and
the interaction capability comprises one or more of the following: jumping to a browser, jumping to a preset application (APP), jumping to a phone APP for dial, jumping to a map APP for positioning and navigation, jumping to another APP to share a rich media card, jumping to a quick application, and the like, wherein the preset APP is an APP having a web page version.

3. The system according to claim 1, wherein the card data comprises card layout information of the original rich media card and component parameters of each component in the original rich media card, and the component parameters comprise some or all of a component name, information indicating display content of a component, a URL link for implementing a specified interaction capability of the component, a component type, and the like.

4. The system according to claim 1, wherein the first information comprises an identifier of each rich media capability in the first rich media set; or
the first information comprises a version number of the first rich media set, the card server stores version numbers of a plurality of rich media capability sets, and the plurality of rich media capability sets comprise the first rich media set.

5. The system according to claim 1, wherein the generating first card information based on the card parameters and the first rich media capability set range specifically comprises:
determining, based on the card parameters, at least one rich media capability required by each component in the original rich media card, wherein a rich media capability required by a first component comprises a first rich media capability, and the first component is any component in the original rich media card; and
when the first rich media capability set does not comprise the first rich media capability, performing capability degradation on the first component based on a preset capability degradation relationship; and after capability degradation, generating the first card information of the first rich media card within a rich media capability range of the first application.

6. The system according to claim 5, wherein
the card parameters comprise a component type of the first component, and the rich media capability required by the first component comprises a component rendering capability corresponding to the component type of the first component; and
when the card parameters comprise a URL connection that is used for implementing a specified interaction capability and that is of the first component, the rich media capability required by the first component comprises the specified interaction capability.

7. The system according to claim 5, wherein the capability degradation relationship comprises one or more of the following:
the first rich media capability is degraded to a second rich media capability, or the first rich media capability is degraded to empty; or
the second rich media capability is degraded to a third rich media capability, or the second rich media capability is degraded to empty, wherein
degrading to empty means that degrading to another rich media capability is not allowed.

8. The system according to claim 7, wherein the capability degradation relationship comprises a capability degradation relationship of a component rendering capability and a capability degradation relationship of an interaction capability, wherein
the capability degradation relationship of the component rendering capability comprises one or more of the following:
a dynamic picture rendering capability is degraded to a static picture rendering capability, a horizontal scroll picture rendering capability is degraded to the static picture rendering capability, a video rendering capability is degraded to the static picture rendering capability, a carousel picture rendering capability is degraded to the horizontal scroll picture rendering capability, the static picture rendering capability is degraded to empty, and a voting form rendering capability is degraded to empty; and
the capability degradation relationship of the interaction capability comprises one or more of the following:
a capability of jumping to a preset APP is degraded to a capability of jumping to a browser; the capability of jumping to the browser is degraded to empty; a capability of jumping to a phone APP for dial is degraded to empty; a capability of jumping to a map APP for positioning and navigation is degraded to empty; a capability of jumping to another page of the first application to reply to information is degraded to empty; and a capability of jumping to another APP to share a rich media card is degraded to empty.

9. The system according to any one of claims 1 to 8, wherein
the first rich media capability set does not comprise the first rich media capability, but comprises the second rich media capability, the second rich media capability is a capability obtained after the first rich media capability is degraded, and the first rich media capability and the second rich media capability are component rendering capabilities;
the card parameters comprise information indicating first display content of the first component, wherein the first display content is presented by using the first rich media capability; and
the first rich media card comprises a second component, display content of the second component is second display content, the second display content is determined based on the first display content, and the second display content is presented by using the second rich media capability.

10. The system according to claim 9, wherein
the first rich media capability is the video rendering capability, and the second rich media capability is the static picture rendering capability; and
the first display content is a video, and the second display content is one frame of a static image in the video.

11. The system according to any one of claims 1 to 8, wherein
the first rich media capability set comprises the third rich media capability, but does not comprise the first rich media capability and the second rich media capability, the third rich media capability is a capability obtained after the second rich media capability is degraded, and the first rich media capability, the second rich media capability, and the third rich media capability are component rendering capabilities;
the card parameters comprise information indicating first display content of the first component, wherein the first display content is presented by using the first rich media capability; and
the first rich media card comprises a third component, display content of the third component is third display content, the third display content is determined based on the first display content, and the third display content is presented by using the third rich media capability.

12. The system according to any one of claims 1 to 8, wherein
the first rich media capability set does not comprise the first rich media capability, the first rich media capability cannot be degraded to another rich media capability, and the first rich media capability is the component rendering capability;
the card parameters comprise information indicating first display content of the first component, wherein the first display content is presented by using the first rich media capability; and
the first rich media card does not display the first display content.

13. The system according to claim 12, wherein
the first rich media card comprises a fourth component, display content of the fourth component is a first URL link or replacement content of the first component, and the card parameters comprise the first URL link that is used for implementing an interaction capability and that is of the first component and the replacement content of the first component.

14. The system according to any one of claims 1 to 13, wherein
the card parameters comprise the first URL link that is used for implementing a fourth rich media capability and that is of the first component and a second URL link that is used for implementing a fifth rich media capability and that is of the first component, wherein the fifth rich media capability is a capability obtained after the fourth rich media capability is degraded, and the fourth rich media capability and the fifth rich media capability are interaction capabilities; and
when the first rich media capability set comprises the fourth rich media capability, the first rich media card comprises the first component, and the first terminal device is further configured to: in response to a first input operation on the first component, jump, based on the fourth rich media capability, to a user interface indicated by the first URL link; or
when the first rich media capability set does not comprise the fourth rich media capability, but comprises the fifth rich media capability, the first rich media card comprises a fifth component, and the first terminal device is further configured to: in response to a first input operation on the fifth component, jump, based on the fifth rich media capability, to a user interface indicated by the second URL link.

15. The system according to claim 14, wherein
the first URL link is a URL link of the preset APP, and the second URL link is a URL link of the web page version of the preset APP; and
the fourth rich media capability is the capability of jumping to the preset APP, and the fifth rich media capability is the capability of jumping to the browser.

16. The system according to any one of claims 1 to 13, wherein the first rich media capability set does not comprise the fourth rich media capability, but comprises the fifth rich media capability, the fifth rich media capability is a capability obtained after the fourth rich media capability is degraded, and the fourth rich media capability and the fifth rich media capability are interaction capabilities;
the card parameters comprise the first URL link that is used for implementing the fourth rich media capability and that is of the first component, and the card parameters do not comprise a URL link that is used for implementing the fifth rich media capability and that is of the first component; and
the first rich media card does not comprise a component having the fourth rich media capability.

17. The system according to any one of claims 1 to 13, wherein the first rich media capability set does not comprise a fourth rich media capability, the fourth rich media capability cannot be degraded to another rich media capability, and the fourth rich media capability is the interaction capability;
the card parameters comprise the first URL link that is used for implementing the fourth rich media capability and that is of the first component; and
the first rich media card does not comprise a component having the fourth rich media capability.

18. The system according to claim 16 or 17, wherein the first rich media card comprises a sixth component, the sixth component is generated based on component parameters of the first component, and component parameters of the sixth component do not comprise the first URL link.

19. A rich media information processing method, wherein the method comprises:
sending, by a first terminal device, first information to a card server, wherein the first information indicates a first rich media capability set supported by a first application, and the first rich media capability set comprises at least one rich media capability;
receiving, by the first application of the first terminal device, a rich media message sent by a service device, wherein the rich media message comprises a first label, the first label is a label that is of a first rich media card and that is generated by the card server, card data of the first rich media card is generated by the card server based on card parameters that are of an original rich media card and that are sent by the service device and the first rich media capability set;
sending, by the first application of the first terminal device, an obtaining request to the card server, wherein the obtaining request comprises the first label;
receiving, by the first application of the first terminal device, the card data sent by the card server; and
displaying, by the first application of the first terminal device, the first rich media card based on the card data.

20. The method according to claim 19, wherein rich media capabilities comprise a component rendering capability and an interaction capability;
the component rendering capability is a capability of rendering a specified component in a rich media card, wherein the specified component comprises one or more of the following: a static picture, a dynamic picture, a video, a horizontal scroll picture, a carousel picture, a voting form, a button, and the like; and
the interaction capability comprises one or more of the following: jumping to a browser, jumping to a preset application (APP), jumping to a phone APP for dial, jumping to a map APP for positioning and navigation, jumping to another APP to share a rich media card, jumping to a quick application, and the like, wherein the preset APP is an APP having a web page version.

21. The method according to claim 19, wherein the card data comprises card layout information of the first rich media card and component parameters of each component in the first rich media card, and the component parameters comprise some or all of a component name, information indicating display content of a component, a URL link for implementing a specified interaction capability of the component, a component type, and the like.

22. The method according to claim 19, wherein the first information comprises an identifier of each rich media capability in the first rich media set; or
the first information comprises a version number of the first rich media set, and different rich media capability sets correspond to different version numbers.

23. The method according to claim 19, wherein
at least one rich media capability required by each component in the original rich media card is determined based on the card parameters, wherein a rich media capability required by a first component comprises a first rich media capability, and the first component is any component in the original rich media card; and
when the first rich media capability set does not comprise the first rich media capability, the first card information is generated through capability degradation on the first component based on a preset capability degradation relationship.

24. The method according to claim 23, wherein
the card parameters comprise a component type of the first component, and the rich media capability required by the first component comprises a component rendering capability corresponding to the component type of the first component; and
when the card parameters comprise a URL connection that is used for implementing a specified interaction capability and that is of the first component, the rich media capability required by the first component comprises the specified interaction capability.

25. The method according to claim 23, wherein the capability degradation relationship comprises one or more of the following:
the first rich media capability is degraded to a second rich media capability, or the first rich media capability is degraded to empty; or
the second rich media capability is degraded to a third rich media capability, or the second rich media capability is degraded to empty, wherein
degrading to empty means that degrading to another rich media capability is not allowed.

26. The method according to claim 25, wherein the capability degradation relationship comprises a capability degradation relationship of a component rendering capability and a capability degradation relationship of an interaction capability, wherein
the capability degradation relationship of the component rendering capability comprises one or more of the following:
a dynamic picture rendering capability is degraded to a static picture rendering capability, a horizontal scroll picture rendering capability is degraded to the static picture rendering capability, a video rendering capability is degraded to the static picture rendering capability, a carousel picture rendering capability is degraded to the horizontal scroll picture rendering capability, the static picture rendering capability is degraded to empty, and a voting form rendering capability is degraded to empty; and
the capability degradation relationship of the interaction capability comprises one or more of the following:
a capability of jumping to a preset APP is degraded to a capability of jumping to a browser; the capability of jumping to the browser is degraded to empty; a capability of jumping to a phone APP for dial is degraded to empty; a capability of jumping to a map APP for positioning and navigation is degraded to empty; a capability of jumping to another page of the first application to reply to information is degraded to empty; and a capability of jumping to another APP to share a rich media card is degraded to empty.

27. The method according to any one of claims 19 to 26, wherein
the first rich media capability set does not comprise the first rich media capability, but comprises the second rich media capability, the second rich media capability is a capability obtained after the first rich media capability is degraded, and the first rich media capability and the second rich media capability are component rendering capabilities;
the card parameters comprise information indicating first display content of the first component, wherein the first display content is presented by using the first rich media capability; and
the first rich media card comprises a second component, display content of the second component is second display content, the second display content is determined based on the first display content, and the second display content is presented by using the second rich media capability.

28. The method according to claim 27, wherein
the first rich media capability is the video rendering capability, and the second rich media capability is the static picture rendering capability; and
the first display content is a video, and the second display content is one frame of a static image in the video.

29. The method according to any one of claims 19 to 26, wherein
the first rich media capability set comprises the third rich media capability, but does not comprise the first rich media capability and the second rich media capability, the third rich media capability is a capability obtained after the second rich media capability is degraded, and the first rich media capability, the second rich media capability, and the third rich media capability are component rendering capabilities;
the card parameters comprise information indicating first display content of the first component, wherein the first display content is presented by using the first rich media capability; and
the first rich media card comprises a third component, display content of the third component is third display content, the third display content is determined based on the first display content, and the third display content is presented by using the third rich media capability.

30. The method according to any one of claims 19 to 26, wherein
the first rich media capability set does not comprise the first rich media capability, the first rich media capability cannot be degraded to another rich media capability, and the first rich media capability is the component rendering capability;
the card parameters comprise information indicating first display content of the first component, wherein the first display content is presented by using the first rich media capability; and
the first rich media card does not display the first display content.

31. The method according to claim 30, wherein
the first rich media card comprises a fourth component, display content of the fourth component is a first URL link or replacement content of the first component, and the card parameters comprise the first URL link that is used for implementing an interaction capability and that is of the first component and the replacement content of the first component.

32. The method according to any one of claims 19 to 31, wherein
the card parameters comprise the first URL link that is used for implementing a fourth rich media capability and that is of the first component and a second URL link that is used for implementing a fifth rich media capability and that is of the first component, wherein the fifth rich media capability is a capability obtained after the fourth rich media capability is degraded, and the fourth rich media capability and the fifth rich media capability are interaction capabilities; and
when the first rich media capability set comprises the fourth rich media capability, the first rich media card comprises the first component, and the method further comprises: jumping, by the first terminal device in response to a first input operation on the first component, based on the fourth rich media capability, to a user interface indicated by the first URL link; or
when the first rich media capability set does not comprise the fourth rich media capability, but comprises the fifth rich media capability, the first rich media card comprises a fifth component, and the method further comprises: jumping, by the first terminal device in response to a first input operation on the fifth component, based on the fifth rich media capability, to a user interface indicated by the second URL link.

33. The method according to claim 32, wherein
the first URL link is a URL link of the preset APP, and the second URL link is a URL link of the web page version of the preset APP; and
the fourth rich media capability is the capability of jumping to the preset APP, and the fifth rich media capability is the capability of jumping to the browser.

34. The method according to any one of claims 19 to 31, wherein the first rich media capability set does not comprise the fourth rich media capability, but comprises the fifth rich media capability, the fifth rich media capability is a capability obtained after the fourth rich media capability is degraded, and the fourth rich media capability and the fifth rich media capability are interaction capabilities;
the card parameters comprise the first URL link that is used for implementing the fourth rich media capability and that is of the first component, and the card parameters do not comprise a URL link that is used for implementing the fifth rich media capability and that is of the first component; and
the first rich media card does not comprise a component having the fourth rich media capability.

35. The method according to any one of claims 19 to 13, wherein the first rich media capability set does not comprise a fourth rich media capability, the fourth rich media capability cannot be degraded to another rich media capability, and the fourth rich media capability is the interaction capability;
the card parameters comprise the first URL link that is used for implementing the fourth rich media capability and that is of the first component; and
the first rich media card does not comprise a component having the fourth rich media capability.

36. The method according to claim 34 or 35, wherein the first rich media card comprises a sixth component, the sixth component is generated based on component parameters of the first component, and component parameters of the sixth component do not comprise the first URL link.

37. A terminal device, comprising a memory and a processor, wherein the memory is electrically coupled to the processor, the memory is configured to store program instructions, and the processor is configured to invoke all or some of the program instructions stored in the memory, to perform the method according to any one of claims 19 to 36.

38. A computer storage medium, comprising computer instructions, wherein when the computer instructions are run on a terminal device, the terminal device is enabled to perform the method according to any one of claims 19 to 36.
